(19) Europäisches Patentamt
European Patent Office
Office européen des brevets

(11) **EP 4 556 717 A2**

(12) **EUROPÄISCHE PATENTANMELDUNG**

(43) Veröffentlichungstag:
**21.05.2025 Patentblatt 2025/21**

(21) Anmeldenummer: **25161532.4**

(22) Anmeldetag: **04.03.2025**

(51) Internationale Patentklassifikation (IPC):
**F04D 19/04** (2006.01) **F04D 27/00** (2006.01)
**F04D 29/058** (2006.01) **F16C 32/04** (2006.01)
**F04D 29/051** (2006.01)

(52) Gemeinsame Patentklassifikation (CPC):
**F04D 19/042; F04D 19/048; F04D 27/001;
F04D 29/051; F04D 29/058; F16C 32/0446;
F16C 32/0451; F16C 32/0489;** F05D 2270/802;
F05D 2270/821; F16C 2360/45

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Pfeiffer Vacuum Technology AG
35614 Asslar (DE)**

(72) Erfinder: **Wang, Jinou
35606 Solms-Oberbiel (DE)**

(74) Vertreter: **Manitz Finsterwald
Patent- und Rechtsanwaltspartnerschaft mbB
Martin-Greif-Strasse 1
80336 München (DE)**

(54) **VAKUUMPUMPE MIT AKTIVEM MAGNETLAGER**

(57) Eine Vakuumpumpe umfasst einen Rotor, ein aktives Magnetlager und eine Positionsregelung, die mit dem aktiven Magnetlager in funktionaler Verbindung steht, um den Rotor während des Betriebs der Vakuumpumpe mittels des Magnetlagers in einer vorbestimmten räumlichen Lage zu halten. Ein jeweiliger Istwert für mindestens eine Koordinate der räumlichen Lage des Rotors umfasst einen gemessenen Wert der Koordinate und eine berechnete Koordinatenabweichung. Die Positionsregelung ist ausgebildet, die Koordinatenabweichung anhand mindestens eines Kontrollsignals zu ermitteln, das mit Kräften in Beziehung steht, die durch das Magnetlager ausgeübt werden.

Fig. 5A

EP 4 556 717 A2

**Beschreibung**

Die Erfindung betrifft eine Vakuumpumpe mit einem Rotor, einem aktiven Magnetlager und einer Positionsregelung, die mit dem aktiven Magnetlager in funktionaler Verbindung steht, um den Rotor während des Betriebs der Vakuumpumpe mittels des aktiven Magnetlagers in einer vorbestimmten räumlichen Lage zu halten.

Bestimmte Vakuumpumpen, beispielsweise Turbomolekularpumpen, und andere Vorrichtungen weisen aktive Magnetlager auf, um einen Rotor oder eine Turbine der Vakuumpumpe bzw. Vorrichtung berührungslos zu lagern. Mittels des aktiven Magnetlagers wird der Rotor bzw. die Turbine in einer vorbestimmten räumlichen Lage gehalten.

Zu diesem Zweck umfasst die Vakuumpumpe bzw. die Vorrichtung ein Positionsmesssystem, mit dem die momentane räumliche Lage des Rotors oder der Turbine gemessen und erfasst wird, um die gemessene räumliche Lage des Rotors oder der Turbine als Istwert für eine Regelung des aktiven Magnetlagers zu verwenden. Die Regelung regelt beispielsweise Ströme durch Spulen des aktiven Magnetlagers aktiv auf eine solche Weise, dass der Rotor bzw. die Turbine in einer vorbestimmten räumlichen Lage bleibt, d.h. bei einem vorbestimmten Sollwert für die Position oder die räumliche Lage des Rotors bzw. der Turbine bezogen auf das aktive Magnetlager.

Aufgrund der Kräfte, welche die Spulen des Lagers jeweils auf den Rotor oder die Turbine ausüben, hält die Regelung des aktiven Magnetlagers somit den Istwert der räumlichen Lage des Rotors bzw. der Turbine bei einem vorgegebenen Sollwert, so dass die räumliche Lage des Rotors oder der Turbine robust gegenüber Störungen ist, wie beispielsweise gegenüber variierenden Lasten, Ungenauigkeiten des mechanischen Systems, in welches das aktive Magnetlager und der Rotor bzw. die Turbine eingebunden sind, sowie gegenüber verschiedenen Leistungsstufen z.B. für die Drehzahl des Rotors der Vakuumpumpe.

Wenn jedoch eine Störung bzw. Abweichung durch das Positionsmesssystem an sich bedingt ist, so dass gemessene Werte für die räumliche Lage des Rotors oder der Turbine nicht mehr mit tatsächlichen Istwerten übereinstimmen, ist die Regelung meist nicht in der Lage, eine solche Störung bzw. Abweichung zu erkennen und zu kompensieren. Stattdessen beeinflusst die Regelung die momentane Lage des Rotors bzw. der Turbine derart, dass die gemessene Position bzw. räumliche Lage des Rotors oder der Turbine, d.h. der gemessene Istwert, möglichst mit einer gegebenen Referenz oder mit Sollwerten für die räumliche Lage übereinstimmt. Eine beliebige Drift, die durch das Positionsmesssystem bedingt ist, führt zu einer Drift der gemessenen Position bzw. räumlichen Lage des Rotors oder der Turbine bezogen auf die tatsächliche Position bzw. räumliche Lage.

Während zeitunabhängige Driften bzw. Abweichungen möglicherweise durch eine Kalibrierung des aktiven Magnetlagers ausgeglichen werden können, können zeitabhängige Ungenauigkeiten bzw. Driften, die beispielsweise durch eine Änderung der Temperatur der Vakuumpumpe bzw. der Vorrichtung bedingt sind, zu einer Positionsdrift führen, d.h. zu der vorstehend beschriebenen Abweichung zwischen der gemessenen und der tatsächlichen räumlichen Lage des Rotors bzw. der Turbine, die von der Regelung des aktiven Magnetlagers nicht kompensiert werden kann. Aufgrund von Temperaturänderungen können thermomechanische Veränderungen in dem Messsystem auftreten, beispielsweise Änderungen in den mechanischen Abmessungen von Spulen eines Sensors, sowie thermoelektrische Veränderungen, die beispielsweise eine Änderung des Widerstands einer Sensorspule mit der Temperatur bewirken.

Eine Aufgabe der Erfindung besteht darin, eine Vakuumpumpe und Verfahren für den Betrieb einer solchen zu schaffen, bei denen die räumliche Lage eines Rotors unabhängig von möglichen Ungenauigkeiten innerhalb eines Positionsmesssystems bei einer vorbestimmten räumlichen Position gehalten werden kann.

Diese Aufgabe wird mit einer Vakuumpumpe und mit Verfahren mit den Merkmalen der unabhängigen Ansprüche gelöst. Vorteilhafte Weiterbildungen der Erfindung sind in den Unteransprüchen, der Beschreibung und den Zeichnungen angegeben.

Die erfindungsgemäße Vakuumpumpe, bei der es sich insbesondere um eine Turbomolekularpumpe handelt, umfasst einen Rotor, ein aktives Magnetlager und eine Positionsregelung, die mit dem aktiven Magnetlager in funktionaler Verbindung steht, um den Rotor während des Betriebs der Vakuumpumpe mittels des aktiven Magnetlagers in einer vorbestimmten räumlichen Lage zu halten. Ein jeweiliger Istwert für mindestens eine Koordinate der räumlichen Lage des Rotors umfasst einen gemessenen Wert der Koordinate und eine berechnete Koordinatenabweichung. Die Positionsregelung ist ausgebildet, die Koordinatenabweichung anhand mindestens eines Kontrollsignals zu ermitteln, das mit Kräften in Beziehung steht, die durch das Magnetlager ausgeübt werden. Diese Kräfte umfassen diejenigen Kräfte, die auf den Rotor der Vakuumpumpe ausgeübt werden.

Die mindestens eine Koordinate der räumlichen Lage des Rotors kann eine Länge entlang einer Rotorwelle bzw. Drehachse des Rotors, d.h. in axialer Richtung, und/oder jeweils zwei Koordinaten z.B. in einer x-Richtung und einer y-Richtung in einer oder zwei Ebenen umfassen, die sich senkrecht zur Drehachse des Rotors erstrecken, d.h. in radialer Richtung. Mit anderen Worten kann die Positionsregelung eine axiale Regelung und/oder eine radiale Regelung der räumlichen Lage des Rotors unter Verwendung des aktiven Magnetlagers umfassen. Insgesamt kann die Positionsregelung für das aktive Magnetlager der Vakuumpumpe beispielsweise fünf Koordinaten des Rotors betreffen, d.h. eine Koordinate bezüglich einer Verschiebung in axialer Richtung entlang einer Rotorwelle bzw. Drehachse des Rotors und jeweils zwei Koordinaten in zwei Ebenen rechtwinklig zur Drehachse des Rotors, durch die eine Rotation bzw. ein Verkippen des Rotors bezogen auf die Drehachse erfasst wird. Alternativ kann sich die Positionsregelung auch auf zwei Koordinaten einer Translationsbewegung eines Schwerpunkts des Rotors und auf zwei Winkel beziehen, die das Verkippen einer Achse erfassen, die durch den Schwerpunkt des Rotors verläuft.

Das Kontrollsignal kann anhand von Ist- bzw. Sollwerten von Strömen gegeben sein, die in Spulen innerhalb des Magnetlagers fließen, wobei sich das Kontrollsignal auf Referenzwerte für solche Ströme beziehen kann, die bei einer Kalibrierung der Positionsregelung erfasst werden. Alternativ kann das mindestens eine Kontrollsignal auch durch erfasste Kräfte und Drehmomente gegeben sein, die auf den Schwerpunkt des Rotors wirken, und sich dabei wiederum auf Referenzwerte beziehen, die ebenfalls bei einer Kalibrierung der Positionsregelung erfasst werden.

Da die Positionsregelung über den Rotor der Vakuumpumpe mittels des aktiven Magnetlagers neben dem gemessenen Wert der Koordinate die berechnete Koordinatenabweichung berücksichtigt, die von dem Kontrollsignal abhängt, kann die Positionsregelung eine Veränderung bei der Messung der Koordinate berücksichtigen, z.B. eine zeitliche Drift dieser Koordinate, die beispielsweise durch thermomechanische oder thermoelektrische Veränderungen bei einer Änderung der Temperatur innerhalb eines Systems auftreten kann, das die Koordinate bzw. insgesamt die räumliche Lage des Rotors erfasst und deren Istwert für die Positionsregelung festlegt. Mit anderen Worten gestattet die Erfassung der Koordinatenabweichung anhand des Kontrollsignals eine Kompensation möglicher Driften innerhalb von Systemen, welche die mindestens eine Koordinate der räumlichen Lage des Rotors als einen oder mehrere Istwerte für die Positionsregelung erfassen.

Die Berücksichtigung der Koordinatenabweichung stellt somit sicher, dass der jeweilige Istwert für die mindestens eine Koordinate der räumlichen Lage des Rotors dem tatsächlichen Wert für diese Koordinate entspricht, auch wenn der aktuell gemessene Wert der Koordinate aufgrund einer möglichen Drift von einem solchen tatsächlichen Wert abweicht. Dadurch kann der Rotor der Vakuumpumpe auf zuverlässige Weise bei der gewünschten räumlichen Lage gehalten werden, auch wenn Driften innerhalb derjenigen Systeme auftreten, welche die räumliche Lage des Rotors messen bzw. erfassen.

Gemäß einer Ausführungsform umfasst das Kontrollsignal mindestens einen Istwert für einen in dem Magnetlager fließenden Strom. Ein solcher Strom-Istwert kann ein gemessener Strom durch mindestens eine Spule des aktiven Magnetlagers sein. Der Istwert kann mit einem Referenzwert für einen solchen Strom durch mindestens eine Spule des aktiven Magnetlagers in Beziehung gesetzt werden, wobei ein solcher Referenzwert beispielsweise bei einer Kalibrierung der Positionsregelung festgelegt wird.

Die Positionsregelung für die räumliche Lage des Rotors mittels des aktiven Magnetlagers kann typischerweise eine innere Regelungsschleife für einen oder mehrere Ströme durch die Spulen des Magnetlagers und eine äußere Regelungsschleife für die Position bzw. räumliche Lage des Rotors umfassen. Da ein jeweiliger Istwert der mindestens einen Koordinate der räumlichen Lage des Rotors über das Kontrollsignal mit dem Istwert für einen oder mehrere in dem Magnetlager fließenden Strom bzw. fließende Ströme in Beziehung steht, erfolgt bei dieser Ausführungsform, die das Kontrollsignal mit dem Istwert des einen Stroms oder der mehreren Ströme in Beziehung setzt, eine Kopplung der Istwerte für die innere und äußere Regelungsschleife. Der Istwert für die Koordinate der räumlichen Lage kann somit von dem Istwert eines oder mehrerer Ströme innerhalb des Magnetlagers abhängen. Eine zeitliche Änderung des einen oder der mehreren Ströme kann anhand des Kontrollsignals eine Drift des Istwerts der einen oder mehreren Koordinaten erfassen und kompensieren.

Alternativ kann das Kontrollsignal mindestens einen Sollwert für einen in dem Magnetlager fließenden Strom umfassen. Die Verwendung eines solchen Sollwerts anstelle des Istwerts für den in dem Magnetlager fließenden Strom kann ein stabileres Kontrollsignal bereitstellen, da Übergänge und Sprünge, die möglicherweise bei der Erfassung des Istwerts für den Strom auftreten, sich in dem Sollwert für den Strom nicht widerspiegeln.

Die Positionsregelung des Rotors kann mittels des aktiven Magnetlagers fünf Koordinaten der räumlichen Lage des Rotors regeln, und ein jeweiliger Istwert für die fünf Koordinaten kann einen gemessenen Wert der jeweiligen Koordinate und eine jeweilige berechnete Koordinatenabweichung umfassen, die von einem jeweiligen Istwert oder Sollwert eines jeweiligen Stroms abhängt, der durch eine jeweilige Spule des Magnetlagers fließt, die einer jeweiligen der fünf Koordinaten zugeordnet ist. Eine solche Berücksichtigung von fünf Koordinaten bei der Positionsregelung des Rotors gestattet die Regelung einer Längsverschiebung des Rotors bzw. entlang dessen Drehachse, d.h. in axialer Richtung, und einer Verkippung des Rotors bezogen auf eine solche Drehachse, d.h. in radialer Richtung, mit einer Kompensation der jeweiligen Drift bei der Erfassung der jeweiligen Koordinate, die anhand der jeweiligen berechneten Koordinatenabweichung erfasst wird.

Gemäß einer weiteren Ausführungsform kann das jeweilige Kontrollsignal einen Sollwert für eine Kraft und/oder ein Drehmoment, die auf einen Schwerpunkt des Rotors wirken, in Richtung der mindestens einen Koordinate umfassen. Bei dieser Ausführungsform erfolgt somit zunächst eine Transformation in das Schwerpunktsystem des Rotors. Das jeweilige Kontrollsignal kann sich dabei auf jeweilige Referenzwerte für die Kraft und/oder das Drehmoment beziehen, die beispielsweise bei einer Kalibrierung der Positionsregelung ermittelt werden. Solche Referenzwerte können zusätzliche Informationen bezüglich der räumlichen Lage des Rotors bzw. deren Änderung bereitstellen.

Konkret kann die Positionsregelung vier Koordinaten, die zwei Koordinaten der Translation und die zwei Koordinaten der Rotation für den Schwerpunkt des Rotors umfassen, und eine weitere Koordinate regeln, welche eine Verschiebung des Rotors entlang einer Drehachse des Rotors repräsentiert. Das Kontrollsignal kann dementsprechend zwei Sollwerte für eine jeweilige Kraft, die in Richtung jeweils einer der zwei Koordinaten der Translation auf den Schwerpunkt des Rotors wirkt, zwei Sollwerte für ein jeweiliges Drehmoment, das in Richtung jeweils einer der zwei Koordinaten der Rotation auf den Schwerpunkt des Rotors wirkt, und einen Sollwert für einen Strom umfassen, welcher der Verschiebung des Rotors entlang dessen Drehachse zugeordnet ist.

Die Positionsregelung kann ein Tiefpassfilter für das Kontrollsignal umfassen. Das Tiefpassfilter kann vorzugsweise eine Cutoff-Frequenz aufweisen, die kleiner als 1 Hz ist. Mittels des Tiefpassfilters kann der Einfluss von Störungen auf das Kontrollsignal verringert werden, die durch Schwankungen und Sprünge innerhalb der Signale bedingt sind, anhand derer das Kontrollsignal ermittelt wird, beispielsweise der Einfluss von Schwankungen und Sprüngen in den Strömen, die durch die Spulen des aktiven Magnetlagers fließen. Der Einfluss von Störungen und Sprüngen wird vor allem dann stark verringert, wenn die Cutoff-Frequenz des Tiefpassfilters im Subherz-Bereich liegt, d.h. kleiner als 1 Hz ist.

Die berechnete Koordinatenabweichung kann durch eine Differenz zwischen einem momentan gemessenen Wert des Kontrollsignals und einem unmittelbar nach einer Kalibrierung der Positionsregelung ermittelten Referenzwert des Kontrollsignals gegeben sein. Die Differenz des momentan gemessenen Kontrollsignals bezogen auf einen Wert des Kontrollsignals bei oder unmittelbar nach einer Kalibrierung der Positionsregelung spiegelt direkt die Drift wider, welcher der gemessene Istwert der Koordinate der räumlichen Lage des Rotors ausgesetzt ist. Durch die Bezugnahme auf den Referenzwert kann die seit der Kalibrierung aufgetretene Drift kompensiert werden. Ein Verfahren zum Kalibrieren des aktiven Magnetlagers ist nachstehend beschrieben.

Weiterer Gegenstand der Erfindung ist ferner ein Verfahren zum Regeln einer Position eines Rotors einer Vakuumpumpe, bei der es sich insbesondere um eine Turbomolekularpumpe handelt. Die Vakuumpumpe umfasst den Rotor, ein aktives Magnetlager und eine Positionsregelung für den Rotor, die mit dem Magnetlager in einer funktionalen Verbindung steht. Gemäß dem Verfahren wird der Rotor während des Betriebs der Vakuumpumpe mittels des Magnetlagers und der Positionsregelung in einer vorbestimmten räumlichen Lage gehalten. Ein jeweiliger Istwert für mindestens eine Koordinate der räumlichen Lage des Rotors wird anhand eines gemessenen Werts der Koordinate und anhand einer berechneten Koordinatenabweichung festgelegt. Die Koordinatenabweichung wird anhand eines Kontrollsignals ermittelt, das mit Kräften in Beziehung steht, die durch das Magnetlager ausgeübt werden.

Das Verfahren ist folglich für den Betrieb der vorstehend beschriebenen Vakuumpumpe vorgesehen. Daher gelten für das Verfahren die Ausführungen zur Vakuumpumpe entsprechend, und dies gilt insbesondere hinsichtlich der Vorteile und der bevorzugten Ausführungsformen. Ferner versteht es sich, dass sämtliche hierin genannten Merkmale miteinander kombinierbar sind, sofern nicht explizit etwas Gegenteiliges angegeben ist.

Das erfindungsgemäße Verfahren zeichnet sich dadurch aus, dass der jeweilige Istwert für die mindestens eine Koordinate der räumlichen Lage des Rotors nicht nur anhand jeweiliger gemessener Werte festgelegt wird, sondern dass zusätzlich eine Koordinatenabweichung berechnet wird, welche eine mögliche Drift bei der Erfassung des gemessenen Werts der Koordinate widerspiegelt. Die Koordinatenabweichung kann wiederum anhand von Ist- oder Sollwerten für Ströme, die durch Spulen des aktiven Magnetlagers fließen, und/oder anhand von ermittelten Kräften und Drehmomenten berechnet werden, die auf den Schwerpunkt des Rotors wirken.

Gemäß einer Ausführungsform des Verfahrens wird die berechnete Koordinatenabweichung anhand einer Differenz zwischen einem momentanen Wert des Kontrollsignals und einem bei einer Kalibrierung des Magnetlagers ermittelten Wert des Kontrollsignals ermittelt. Die Differenz kann folglich die mögliche Drift bei der Erfassung der Position des Rotors bzw. der einen oder mehreren Koordinaten der räumlichen Lage des Rotors widerspiegeln. Somit kann das Verfahren eine direkte Kompensation dieser Drift bewirken.

Ferner kann ein Tiefpassfilter auf das Kontrollsignal angewendet werden, und dieses Tiefpassfilter kann vorzugsweise eine Cutoff-Frequenz aufweisen, die kleiner als 1 Hz ist. Das Tiefpassfilter kann Störungen und Sprünge des Kontrollsignals unterdrücken und somit die Zuverlässigkeit des Kontrollsignals verbessern. Dies gilt insbesondere bei Verwendung der Cutoff-Frequenz im Subherz-Bereich.

Gemäß einer weiteren Ausführungsform des Verfahrens können fünf Koordinaten der räumlichen Lage des Rotors mittels des aktiven Magnetlagers durch die Positionsregelung des Rotors geregelt werden. Ein jeweiliger Istwert für die fünf Koordinaten umfasst jeweils einen gemessenen Wert der Koordinate und eine berechnete Koordinatenabweichung, die von einem jeweiligen Istwert oder Sollwert eines jeweiligen Stroms abhängt, der durch eine jeweilige Spule des Magnetlagers fließt, die einer jeweiligen der fünf Koordinaten zugeordnet ist.

Bei dieser Ausführungsform ist das Kontrollsignal somit ein jeweiliger Istwert oder ein jeweiliger Sollwert für einen Strom durch eine entsprechende Spule innerhalb des aktiven Magnetlagers. Die fünf Koordinaten können einer Stabilisierung des Rotors bezüglich fünf verschiedener Achsen entsprechen. Eine der Koordinaten kann eine Position auf der Drehachse des Rotors bzw. an einer Rotorwelle umfassen, d.h. einer axialen Richtung entlang der Rotorwelle entsprechen, während die weiteren vier Koordinaten jeweils paarweise zwei Ebenen zugeordnet sind, die senkrecht zur Drehachse des Rotors verlaufen.

Ferner kann sich der jeweilige gemessene Wert der Koordinate auf einen jeweiligen Referenzwert beziehen, der unmittelbar nach einer Kalibrierung der Positionsregelung ermittelt wird. Die jeweiligen Referenzwerte entsprechen einer gewünschten räumlichen Lage des Rotors, bei welcher dieser im Betrieb der Vakuumpumpe gehalten werden soll. Ein Verfahren zum Kalibrieren der Positionsregelung ist nachstehend näher beschrieben. Dieses Verfahren stellt die Grundlagen für das Verfahren zum Regeln der Position des Rotors während des Betriebs der Vakuumpumpe bereit, d.h. einschließlich der vorstehend beschriebenen Driftkompensation für die gemessenen Positionswerte des Rotors der Vakuumpumpe.

Weiterer Gegenstand der Erfindung ist somit ein Verfahren zum Kalibrieren einer Positionsregelung einer Vakuumpumpe, insbesondere einer Turbomolekularpumpe. Die Vakuumpumpe weist einen Rotor und ein aktives Magnetlager mit mehreren Lagerelementen auf, die jeweils einer von mehreren räumlichen Achsen zugeordnet sind. Die Positionsregelung steht mit den Lagerelementen in einer funktionalen Verbindung, um den Rotor mittels der Lagerelemente jeweils entlang der zugeordneten Achse zu positionieren.

Gemäß dem Verfahren werden die Lagerelemente jeweils mittels der Positionsregelung derart gesteuert, dass der Rotor entlang der jeweiligen Achse verschoben wird, bis ein mechanischer Kontakt zwischen dem Rotor und einem jeweiligen Fanglager der Vakuumpumpe auftritt. Während der Steuerung der jeweiligen Lagerelemente werden Ausgangssignale der Positionsregelung erfasst, die einer Extremwert-Ermittlungseinheit zugeführt werden. Diese ist ausgebildet, Extremwerte des jeweiligen Ausgangssignals Endpositionen des Rotors zuzuordnen, bei denen der mechanische Kontakt zwischen dem Rotor und einem der Fanglager entlang der jeweiligen Achse auftritt. Anhand der Endpositionen und der Extremwerte werden schließlich Kalibrierungswerte für die Positionsregelung berechnet, welche die Positionsregelung während des Betriebs der Vakuumpumpe verwendet, um den Rotor in einer vorbestimmten räumlichen Lage zu halten.

Bei den jeweiligen Endpositionen entlang der jeweiligen Achse berührt beispielsweise eine Welle des Rotors ein jeweiliges Fanglager der Vakuumpumpe. Der Abstand zwischen den Endpositionen entlang der jeweiligen Achse, der dem Abstand zwischen den Fanglagern entlang dieser Achse im Wesentlichen gleich ist, ist für eine spezifische Vakuumpumpe bekannt und kann daher verwendet werden, um sozusagen einen Nullpunkt oder Sollwert für die Positionierung des Rotors entlang der jeweiligen Achse festzulegen. Beispielsweise kann eine geometrische Mitte bzw. der Mittelwert zwischen den Endpositionen, d.h. zwischen den Fanglagern entlang der jeweiligen Achse, eine solche Soll-Position oder Null-Position definieren.

Die vorbestimmte räumliche Lage des Rotors kann durch diese Soll-Positionen entlang der jeweiligen Achsen gegeben sein. Anhand der Extremwerte können dann bezogen auf die jeweiligen Soll-Positionen, die von den Endpositionen abhängen und durch diese definiert sind, die Kalibrierungswerte berechnet werden, die sozusagen als Skalierungsfaktoren eine Zuordnung der Ausgangssignale der Positionsregelung zu jeweiligen Abständen des Rotors bezogen auf die Soll- oder Nullposition entlang der jeweiligen Achse gestatten. Diese Abstände können somit auch als Koordinaten bzw. Koordinatenwerte entlang der jeweiligen Achse bezeichnet werden.

Die Zuordnung zwischen dem jeweiligen Ausgangssignal der Positionsregelung und der Koordinate bzw. dem Abstand von der Soll-Position entlang der jeweiligen Achse kann beispielsweise mittels einer linearen Funktion bzw. Regression erfolgen. Die Kalibrierungswerte können bei einer solchen Ausführung eine Steigung und einen Offset für die jeweilige Achse umfassen, die jeweils anhand zweier Extremwerte des Ausgangssignals und anhand des Abstands zwischen den Endpositionen für die jeweilige Achse berechnet werden können. Im Einzelnen können die Kalibrierungswerte, d.h. die jeweilige Steigung und der jeweilige Offset, als Parameter einer linearen Regression ermittelt werden.

Mittels des Verfahrens werden somit gemessene Werte der Position des Rotors entlang der jeweiligen Achse kalibriert, d.h. die Positionsrückkopplung innerhalb der Positionsregelung. Die Verschiebung des Rotors kann nacheinander entlang jeweils einer der vorgegebenen Achsen erfolgen, bis für alle Achsen jeweils zwei Extremwerte erfasst sind. Der mechanische Kontakt zwischen dem Rotor bzw. dessen Welle und dem jeweiligen Fanglager kann für die Achsen jeweils in beliebiger Reihenfolge mittels der Aktivierung der jeweiligen Lagerelemente hergestellt werden. Es kann jedoch eine bestimmte Sequenz für die Aktivierung der jeweiligen Lagerelemente vorgegeben sein, wie nachstehend erläutert wird.

Insbesondere wenn die Vakuumpumpe als Turbomolekularpumpe ausgebildet ist, können die vorgegebenen Achsen eine axiale Achse, die entlang einer Drehachse des Rotors verläuft, und vier radiale Achsen umfassen. Jeweils zwei dieser radialen Achsen verlaufen senkrecht zueinander in einer jeweiligen Ebene rechtwinklig zu der axialen Achse, wobei die beiden radial ausgerichteten Ebenen in axialer Richtung voneinander beabstandet sind. Die jeweils zwei radialen Achsen in zwei Ebenen können eine Stabilisierung des Rotors im Schwebezustand sowohl bezogen auf eine radiale Verschiebung als auch bezogen auf eine Rotation bzw. Verkippung des Rotors bezüglich der axialen Achse bewirken.

Bei einer solchen Ausführung werden gemäß dem Verfahren zehn Extremwerte erfasst, d.h. jeweils zwei für jede der fünf Achsen. Die Kalibrierungswerte umfassen in diesem Fall ebenfalls zehn Werte, und zwar fünf Steigungswerte und fünf Offsets, wenn die Zuordnung der Ausgangssignale der Positionsregelung zu den Koordinaten bzw. Abständen bezogen auf die jeweiligen Soll- bzw. Nullwerte mittels einer linearen Funktion erfolgt.

Bevor die Ausgangssignale der Positionsregelung der Extremwert-Ermittlungseinheit zugeführt werden, können die Ausgangssignale mittels eines Tiefpasses gefiltert werden. Dadurch können hochfrequente Übergänge innerhalb der Ausgangssignale gedämpft werden, und es kann die Qualität bei der Ermittlung der Extremwerte der Ausgangssignale verbessert werden.

Die Lagerelemente des aktiven Magnetlagers können axiale Lagerelemente und radiale Lagerelemente umfassen. Die jeweiligen Extremwerte für die radialen Lagerelemente können ermittelt werden, während die axialen Lagerelemente aktiviert sind. Die vorgegebenen Achsen können dementsprechend eine axiale Achse entlang der Drehachse des Rotors und mehrere radiale Achsen umfassen, z.B. jeweils zwei radiale Achsen in zwei verschiedenen Ebenen, die sich rechtwinklig zu der axialen Achse erstrecken.

Durch die Aktivierung der axialen Lagerelemente wird der Rotor während der Kalibrierung für die radialen Achsen in einen Schwebezustand versetzt, so dass die Kalibrierung der Positionsregelung des Rotors bezüglich der Koordinaten in radialer Richtung, d.h. senkrecht zur Drehachse des Rotors, nicht durch eine Bewegung des Rotors in axialer Richtung oder gar durch einen Kontakt des Rotors mit einem axialen Fanglager beeinflusst oder verfälscht werden kann. Dadurch kann die Zuverlässigkeit der Kalibrierung für die Positionsregelung und somit auch die Ermittlung des Kontrollsignals zur Kompensation der möglichen Drift bei der Erfassung der räumlichen Lage des Rotors verbessert werden, wie nachstehend erläutert wird.

Die jeweiligen Extremwerte für die radialen Lagerelemente können anhand einer vorbestimmten Sequenz ermittelt werden, bis allen Lagerelementen ein jeweiliger Extremwert zugeordnet ist. Die vorbestimmte Sequenz kann umfassen, dass i) stets nur radiale Lagerelemente aktiviert werden, die der gleichen radialen Richtung oder zwei benachbarten radialen Richtungen zugeordnet sind, und ii) nur solche radiale Lagerelemente neu aktiviert werden, die den bisher aktivierten Lagerelementen unmittelbar benachbart sind.

Damit die vorstehenden Bedingungen der vorbestimmten Sequenz für die Aktivierung der radialen Lagerelemente erfüllt sein können, muss gegebenenfalls mindestens eines der momentan aktiven Lagerelemente wieder deaktiviert werden, da ansonsten Lagerelemente für mehr als zwei unterschiedliche Richtungen gleichzeitig aktiviert wären. Durch die vorbestimmte Sequenz kann ein hartes mechanisches Auftreffen des Rotors auf das jeweilige Fanglager vermieden werden, wenn ein mechanischer Kontakt zwischen der Rotorwelle und dem entsprechenden Fanglager auftritt.

Unmittelbar nach der Berechnung der jeweiligen Kalibrierungswerte für die jeweiligen Lagerelemente können alle Lagerelemente erneut aktiviert werden. Während dieser Aktivierung der Lagerelemente können momentane Kontrollsignale der Positionsregelung, die mit Kräften in Beziehung stehen, die durch das Magnetlager ausgeübt werden, als Referenzwerte erfasst und in einem nicht-flüchtigen Medium gespeichert werden. Diese Referenzwerte können während des Betriebs der Vakuumpumpe zur Korrektur jeweiliger gemessener Werte einer jeweiligen Koordinate des Rotors entlang der jeweiligen Achse verwendet werden, d.h. für die vorstehend beschriebene Driftkompensation.

Mit anderen Worten kann direkt nach einer erfolgreichen Kalibrierung des aktiven Magnetlagers ein Schnappschuss der momentanen Werte für die Kontrollsignale der Positionsregelung erfasst werden, während das Magnetlager aktiviert ist und der Rotor in einem schwebenden Zustand stabilisiert ist. Wenn der Schnappschuss erfasst wird, sollten jedoch Übergänge und Schwankungen innerhalb der Positionsregelung abgeschlossen bzw. verschwunden sein, die möglicherweise nach der Aktivierung des aktiven Magnetlagers auftreten, und der Rotor sollte sich in einem stabilen, stationären Zustand befinden.

Mittels der momentanen Werte der Kontrollsignale kann der Rotor der Vakuumpumpe somit in der vorbestimmten räumlichen Lage gehalten werden, wenn die Positionsregelung gleichzeitig die zuvor berechneten Kalibrierungswerte verwendet. Wie vorstehend erläutert, können die Kontrollsignale Istwerte oder Sollwerte für in dem aktiven Magnetlager fließende Ströme oder Sollwerte für Kräfte und/oder Drehmomente umfassen, die auf den Schwerpunkt des Rotors wirken.

Während des Betriebs der Vakuumpumpe können die mittels des Schnappschusses nach der Kalibrierung erfassten Referenzwerte mit aktuell oder momentan gemessenen Werten des Kontrollsignals in Beziehung gesetzt werden, beispielsweise durch eine Differenz zwischen den aktuellen Werten und den Referenzwerten, um eine jeweilige Koordinatenabweichung für die jeweilige Achse der Positionsregelung zu bestimmen. Wie vorstehend erläutert, kann diese jeweilige Koordinatenabweichung verwendet werden, um einen aktuell oder momentan gemessenen Wert für eine jeweilige Koordinate des Rotors entlang der jeweiligen Achse zu korrigieren. Dadurch kann die vorstehend beschriebene Driftkompensation erfolgen.

Nachfolgend wird die Erfindung beispielhaft anhand vorteilhafter Ausführungsformen unter Bezugnahme auf die beigefügten Figuren beschrieben. Es zeigen, jeweils schematisch:

Fig. 1     ein beispielhaftes Positionsmesssystem für eine axiale Bewegung einer Rotorwelle,

Fig. 2     eine beispielhafte Schaltung zum Evaluieren der Position der Rotorwelle für das Positionsmesssystem von Fig. 1,

Fig. 3    ein beispielhaftes aktives Magnetlager,

Fig. 4    eine beispielhafte Regelung für ein aktives Magnetlager,

Fig. 5    erfindungsgemäße erweiterte Regelungen für ein aktives Magnetlager,

Fig. 6    eine Anordnung von Magnetlagern und Sensoren für eine Turbomolekularpumpe,

Fig. 7    eine beispielhafte Positionsregelung für einen Rotor einer Turbomolekularpumpe in dessen Schwerpunktsystem und

Fig. 8    eine Transformation von Koordinaten des Rotors in dessen Schwerpunktsystem.

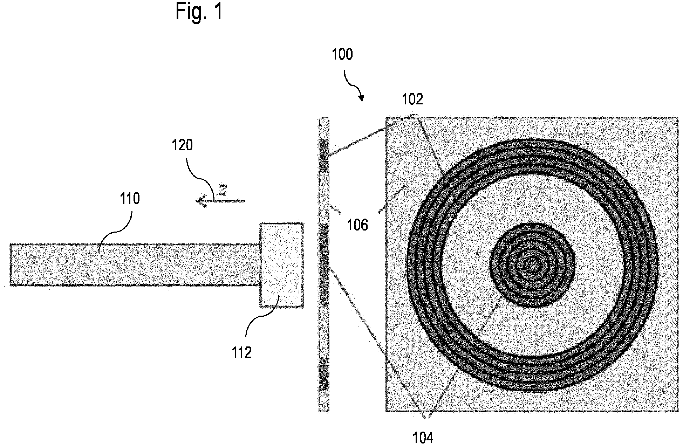

In Fig. 1 ist schematisch ein Positionsmesssystem 100 dargestellt, das für die Ermittlung einer axialen Position einer Rotorwelle 110 vorgesehen ist. Die Rotorwelle 110 kann beispielsweise Teil eines Rotors sein, der sich in einer Vakuumpumpe befindet, beispielsweise in einer Turbomolekularpumpe. Die axiale Richtung ist in Fig. 1 durch den Pfeil 120 in z-Richtung dargestellt.

Das Positionsmesssystem 100 umfasst eine äußere Referenzspule 102 und eine innere Sensorspule 104, die beide auf einer Leiterplatine (PCB, von engl. Printed Circuit Board) angeordnet sind. Die Leiterplatine 106 ist in Fig. 1 auf der rechten Seite in Draufsicht und weiter links in einer Seitenansicht dargestellt, um die Wechselwirkung mit der Rotorwelle 110 zu veranschaulichen. Um die axiale Position in z-Richtung zu messen bzw. zu ermitteln, ist die Rotorwelle 110 mit einem Target 112 ausgestattet, das aus einem nicht-ferromagnetischen Material hergestellt ist, beispielsweise aus Aluminium oder rostfreiem Stahl, und das an der Rotorwelle 110 derart angebracht ist, dass eine magnetische Wechselwirkung zwischen dem Target 112 und den Spulen 102, 104 des Positionsmesssystems 100 erfolgt.

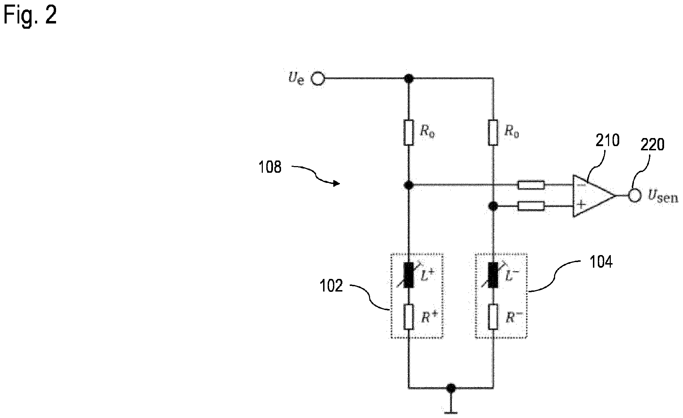

In Fig. 2 ist eine beispielhafte Schaltung 108 dargestellt, die zum Erfassen der Position des Targets 112 und damit der Rotorwelle 110 in axialer Richtung, d.h. in Fig. 1 in z-Richtung, vorgesehen ist. Die Referenzspule 102 und die Sensorspule 104 des Positionsmesssystems 100 sind in Fig. 2 durch eine jeweilige Ersatzschaltung mit einer Induktivität L und einem Widerstand R dargestellt. Die Spulen 102, 104 werden beide über einen jeweiligen Vorwiderstand $R_0$ mit einer Eingangsspannung $U_e$ versorgt.

Die Wechselwirkung des Targets 112 (vgl. Fig. 1) mit der Referenzspule 102 und der Sensorspule 104 bewirkt eine Differenzspannung zwischen den Spulen 102, 104, die mittels eines Operationsverstärkers 210 verstärkt und bei 220 als Ausgangsspannung $U_{sen}$ des Positionsmesssystems 100 ausgegeben wird. Wenn eine Bewegung der Rotorwelle 110 und damit des Targets 112 in axialer z-Richtung erfolgt (vgl. Fig. 1), ändern sich die Induktivität $L^-$ und der äquivalente Reihenwiderstand $R^-$ der Sensorspule 104, während die Induktivität $L^+$ und der äquivalente Reihenwiderstand $R^+$ der Referenzspule 102 nahezu konstant bleiben. Diese Änderungen der elektrischen Größen innerhalb der Schaltung 108 können somit über die Ausgangsspannung $U_{sen}$ bei 220 detektiert und als eine axiale Bewegung bzw. axiale Position (bei festgelegtem Bezugspunkt) interpretiert werden.

In einer Vakuumpumpe sind die Rotorwelle 110 und das Target 112 Teil eines Rotors, der mittels eines aktiven Magnetlagers (AMB, von engl. Active Magnetic Bearing) auf eine berührungslose Weise gelagert wird. Mittels des Positionsmesssystems 100 (vgl. Fig. 1) wird die Position des Targets 112 und damit des Rotors der Vakuumpumpe einschließlich der Rotorwelle 110 in axialer Richtung gemessen, d.h. in z-Richtung in Fig. 1.

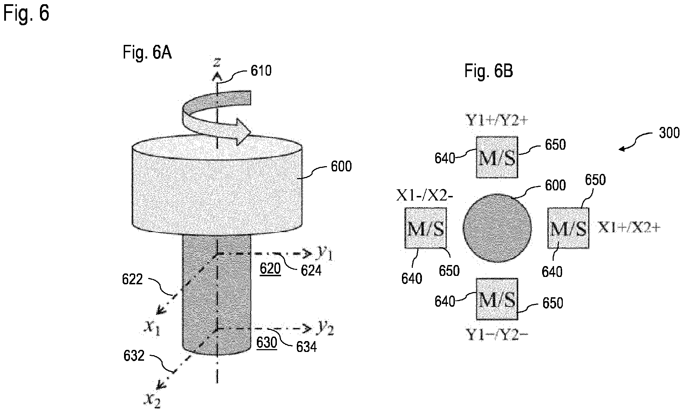

Die bei 220 in Fig. 2 erhaltene Ausgangsspannung $U_{sen}$ der Schaltung 108, welche die Position des Rotors bzw. des Targets 112 in der z-Richtung repräsentiert, wird als Istwert für die Position des Targets 112 in einer Positionsregelung verwendet, um die von Spulen des aktiven Magnetlagers ausgeübten Lagerkräfte aktiv zu regeln und das Target 112 und somit den gesamten Rotor der Vakuumpumpe in einer vorbestimmten räumlichen Lage zu halten. Für eine vollständige Positionsregelung des Rotors der Vakuumpumpe sind jedoch neben der in Fig. 1 gezeigten Messung mittels des Positionsmesssystems 100 weitere Messungen der Position in anderen Richtungen bzw. Ebenen erforderlich, wie dies im Zusammenhang mit Fig. 6 näher erläutert ist. In Fig. 1 und 2 ist das Prinzip der Positionsregelung jedoch nur für eine Dimension näher erläutert.

Die Positionsregelung des Rotors der Vakuumpumpe mittels des aktiven Magnetlagers ist zwar gegenüber gewissen Störungen stabil, wie beispielsweise gegenüber einer variierenden Last, Ungenauigkeiten innerhalb des mechanischen Systems, d.h. bezüglich der Komponenten des Rotors und des aktiven Magnetlagers, sowie gegenüber Leistungsstufen usw. Wenn eine Störung jedoch durch das Positionsmesssystem 100 an sich hervorgerufen wird, ist die Positionsregelung meist nicht in der Lage, eine solche Störung zu erkennen und dieser mittels der Regelung entgegenzuwirken. Die Positionsregelung ist lediglich in der Lage, die Position des Targets 112 und damit des Rotors der Vakuumpumpe derart zu regeln, dass die gemessene Position, d.h. deren Istwert, mit einer gegebenen Referenz bzw. einem gegebenen Sollwert übereinstimmt. Wenn hingegen eine Ungenauigkeit, beispielsweise eine Drift, innerhalb des Positionsmesssystems 100 auftritt, bewirkt diese eine entsprechende Ungenauigkeit bzw. Drift in der tatsächlichen Position des Targets 112 bzw. des Rotors der Vakuumpumpe.

Die Ursachen für eine solche beobachtbare Positionsdrift sind beispielsweise zeitlich variierende Ungenauigkeiten des Positionsmesssystems 100 (vgl. Fig. 1), während zeitlich invariante Unsicherheiten bzw. Ungenauigkeiten beispielsweise durch einen Kalibrierungsprozess des Positionsmesssystems 100 auf eine gewisse Weise kompensiert werden können.

Die zeitlich variierenden Ungenauigkeiten können beispielsweise durch eine Änderung der Temperatur nach einer Kalibrierung des Positionsmesssystems 100 hervorgerufen werden. Temperaturänderungen bilden die Hauptquelle für eine mögliche Positionsdrift.

Bei einer Änderung der Temperatur des Positionsmesssystems können einerseits thermomechanische Änderungen auftreten. Beispielsweise können sich die mechanischen Abmessungen des Trägers der Sensorspule 104 mit der Temperatur ändern, z.B. durch eine Ausdehnung oder Schrumpfung innerhalb des Materials der Leiterplatine 106 (vgl. Fig. 1), oder es können sich die Abmessungen anderer Materialien innerhalb des Positionsmesssystems 100 auf andere Weise ändern. Durch solche Änderungen der Abmessungen kann sich das äquivalente Volumen der Sensorspule 104 ändern, was eine Änderung ihrer Induktivität bewirkt. Da die Betriebsweise des Positionsmesssystems 100 von Fig. 1 auf dem Detektieren bzw. Ermitteln von Induktivitätsänderungen beruht, die durch eine Verschiebung zwischen der Sensorspule 104 und dem Target 112 bedingt sind, kann eine temperaturabhängige Induktivitätsänderung innerhalb der Sensorspule 104 auf fehlerhafte Weise als eine Positionsänderung erfasst werden.

Außerdem kann die Änderung der Temperatur thermoelektrische Änderungen bewirken, da sich der Widerstand der Sensorspule 104 mit der Temperatur ändert.

Dies kann zusätzlich zu den vorstehend beschriebenen thermomechanischen Änderungen eine Drift des endgültigen elektrischen Ausgangssignals $U_{sen}$ bewirken, was wiederum fälschlicherweise als eine Positionsänderung erfasst werden kann. Da das Positionsmesssystem 100 eine Wirbelstrom-basierte Positionsermittlung durchführt, können temperaturabhängige Widerstandsänderungen des Targets 112 eine ähnliche Positionsdrift, d.h. eine ähnliche Drift des Ausgangssignals $U_{sen}$, wie die Sensorspule 104 an sich bewirken.

Nachfolgend sind daher eine Vakuumpumpe mit einem aktiven Magnetlager und ein Verfahren für deren Betrieb beschrieben, bei denen die vorstehend beschriebene Positionsdrift aufgrund zeitlich variierender Unsicherheiten bzw. Ungenauigkeiten modelliert wird, um eine solche Positionsdrift kompensieren zu können.

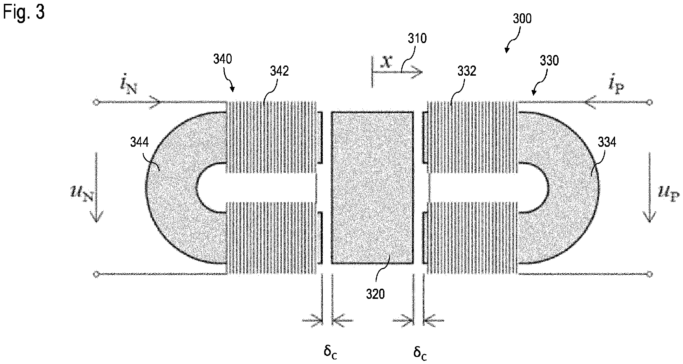

Fig. 3 zeigt schematisch ein Beispiel eines stromgetriebenen eindimensionalen aktiven Magnetlagers, das in einem differentiellen Betriebsmodus betrieben wird. Die eine Dimension ist durch den Pfeil 310 veranschaulicht, der eine x-Richtung repräsentiert. Das aktive Magnetlager 300 dient dazu, einen zu positionierenden Körper bzw. eine Lagerlast 320 in der geometrischen Mitte des Magnetlagers 300 zu halten, d.h. bei x = 0. Die Lagerlast 320 ist beispielsweise die Rotorwelle 110 mit dem Target 112, die in Fig. 1 dargestellt sind und Teil eines Rotors der Vakuumpumpe bilden. Die x-Richtung 310 in Fig. 3 entspricht in diesem Fall der axialen Richtung entlang einer Drehachse des Rotors der Vakuumpumpe, d.h. der z-Richtung von Fig. 1.

Um die Lagerlast 320 in der gewünschten Position bei x = 0 zu halten, umfasst das aktive Magnetlager 300 einen Elektromagneten P 330 auf der positiven Seite der x-Achse und einen Elektromagneten N 340 auf der negativen Seite der x-Achse. Die Elektromagneten 330, 340 weisen jeweilige Spulen 332, 342 sowie jeweilige Magnetkerne 334, 344 auf.

Die zwei Elektromagnete 330, 340 werden mit zwei separaten Leistungsverstärkern betrieben und jeweils mit einem Strom $i_P$ bzw. $i_N$ versorgt, die unabhängig voneinander steuerbar sind. Wie man in Fig. 3 erkennen kann, ist der Strom $i_P$ für den Elektromagneten 330 und dessen Spulen 332 vorgesehen, während der Strom $i_N$ für den Elektromagneten 340 und dessen Spulen 342 vorgesehen ist. Aufgrund des internen Widerstands der Spulen 332, 342 (vgl. die Schaltung 108 in Fig. 2) liegt über den Spulen 332 bzw. 342 jeweils eine Spannung $u_P$ bzw. $u_N$ an.

Der nominelle Luftspalt zwischen den Elektromagneten 330, 340 und der Lagerlast 320, d.h. der Luftspalt für den Gleichgewichtszustand der Lagerlast 320, wenn sich deren Schwerpunkt im geometrischen Zentrum zwischen den beiden Elektromagneten 330 und 340 befindet, ist in Fig. 3 mit $\delta_C$ veranschaulicht. Die Koordinate x beschreibt somit die Positionsabweichung der Lagerlast bezogen auf das geometrische Zentrum zwischen den Elektromagneten 330, 340.

In dem differentiellen Betriebsmodus sind die zwei Lagerströme $i_P$ und $i_N$ durch einen Offset- oder Bias-Strom $i_0$ und einen Steuerstrom $i_C$ folgendermaßen gegeben:

$$i_P = i_0 + i_c \qquad\qquad (1)$$

$$i_N = i_0 - i_c \qquad\qquad (2)$$

Die Lagerkraft, die auf die Lagerlast 320 bei Vorhandensein des nominellen Luftspalts $\delta_C$ ausgeübt wird, ist gegeben durch:

$$F_x = k_i \cdot i_c + k_x \cdot x \qquad\qquad (3)$$

wobei $k_i$ und $k_x$ ein Kraft-Strom-Faktor bzw. ein Kraft-Verschiebungs-Faktor sind, die durch die internen Eigenschaften bzw. Parameter des aktiven Magnetlagers 300 definiert sind.

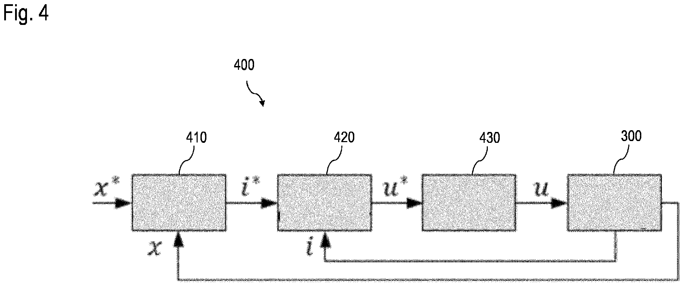

Fig. 4 zeigt eine bekannte Regelung 400 für ein aktives Magnetlager, beispielsweise das Magnetlager 300 von Fig. 3. Die Regelung 400 kann als eine kaskadierte Regelung bezeichnet werden, die als äußere Schleife eine Positionsregelung umfasst. Ein Positionscontroller 410 der Regelung 400 erhält als Sollwert eine Positionsreferenz $x^*$, die beispielsweise bezogen auf die Koordinatenachse von Fig. 3 gleich Null ist und somit das geometrische Zentrum des aktiven Magnetlagers 300 bezeichnet. Der Positionscontroller 410 erhält ferner als Istwert eine gemessene Position x des zu positionierenden Körpers 320 (vgl. Fig. 3), wobei diese gemessene Position beispielsweise mit dem Positionsmesssystem von Fig. 1 erfasst werden kann.

Als Ausgabe oder Ausgangswert gibt der Positionscontroller 410 einen Referenzwert $i^*$ für den Steuerstrom durch das aktive Magnetlager 300 aus, beispielsweise für den vorstehend genannten Strom $i_C$.

Die innere Schleife ist eine Stromregelung mit einem Stromcontroller 420 und einem Verstärker 430. Der Stromcontroller 420 erhält als Sollwert den Stromreferenzwert $i^*$ und als Istwert einen Messwert i für den Strom, der durch das aktive Magnetlager 300 fließt. Der Stromcontroller 420 gibt eine Befehlsspannung $u^*$ an den Verstärker 430 aus, der schließlich die Spulen des Magnetlagers mit der tatsächlichen oder Ist-Spannung u betreibt (vgl. z.B. die Spannungen $u_N$ und $u_P$ in Fig. 3).

Zum Modellieren der vorstehend beschriebenen Positionsdrift wird eine verallgemeinerte Unsicherheit oder Ungenauigkeit des Positionsmesswerts x mit σ bezeichnet, während die gemessene Positionsrückkopplung bzw. der gemessene Positionswert mit x̃ bezeichnet wird. Wenn x die wahre Position des zu positionierenden Körpers 320 (vgl. Fig. 3) bezeichnet, die in Gleichung (3) verwendet werden sollte, erhält man die folgende Beziehung:

$$\tilde{x} = x + \sigma \qquad\qquad (4)$$

Da die Positionsdrift nach einer erfolgreichen Kalibrierung des Positionsmesssystems in Abhängigkeit von der verstrichenen Zeit auftritt, kann angenommen werden, dass die verallgemeinerte Unsicherheit σ unmittelbar nach der Kalibrierung gegen Null geht bzw. ungefähr gleich Null ist. Wenn der Zeitpunkt t = 0 den Zeitpunkt der Kalibrierung bezeichnet, erhält man folglich:

$$\sigma(0) = 0 \qquad\qquad (5)$$

und

$$\tilde{x}(0) = x(0) \qquad\qquad (6)$$

In einem stationären Zustand folgt bei einer Positionsregelung die Positionsrückkopplung x̃ stets der Referenz-position $x^*$, und daher gilt:

$$\tilde{x} \equiv x^* \qquad\qquad (7)$$

Unter Berücksichtigung der Gleichungen (4) und (7) kann die Lagerkraft von Gleichung (3) somit in einem stationären Zustand für t > 0 folgendermaßen ausgedrückt werden:

$$F_x = k_i \cdot i_c + k_x \cdot (x^* - \sigma) \qquad\qquad (8)$$

Wegen Gleichung (5) ist zu der Zeit t = 0 ist folgende Bedingung erfüllt:

$$F_x(0) = k_i \cdot i_c(0) + k_x \cdot x^*(0) \qquad\qquad (9)$$

Es ist zu beachten, dass Gleichung (3) das Verhalten des aktiven Magnetlagers 300 allgemein beschreibt und stets gültig ist, während die Gleichungen (8) und (9) für den Fall gelten, dass die Positionsregelung aktiv und stabil ist. Ferner gelten diese Gleichungen nur für den stationären Zustand, bei dem sämtliche Übergänge der Regelung abgeschlossen sind.

Im Folgenden wird ein Verfahren zum Kompensieren der vorstehend beschriebenen Positionsdrift bzw. der Unsicherheit σ beschrieben, wobei dieses Verfahren für Vakuumpumpen gilt, insbesondere Turbomolekularpumpen. Zunächst wird das Verfahren zur Driftkompensation in einer Dimension erläutert, d.h. für das Magnetlager und das Positionsmesssystem, wie sie in Fig. 1 bis 3 dargestellt sind. Anschließend wird dieses Verfahren auf eine räumliche Positionsregelung für einen Rotor einer Turbomolekularpumpe erweitert.

Das Verfahren zur Driftkompensation bei Vakuumpumpen geht von zwei fundamentalen Annahmen aus. Die erste Annahme besagt, dass der Referenzwert oder Sollwert x* der Positionsregelung zeitunabhängig ist. Es wird also davon ausgegangen, dass der Rotor der Vakuumpumpe, insbesondere der Turbomolekularpumpe, zeitunabhängig im geometrischen Zentrum des Magnetlagers gehalten werden soll (in Fig. 3 bei x = 0). Es gilt daher:

$$x^*(t) = x^*(0) \text{ für } t \geq 0 \qquad (10)$$

Die zweite Annahme besagt, dass sich auch die Lagerkraft $F_x$ nicht mit der Zeit ändert. Das aktive Magnetlager soll den Rotor nämlich zeitunabhängig und berührungslos bei der vorgesehenen Position schwebend halten. Mit anderen Worten sollen die Lagerkräfte die Gewichtskraft mg des Rotors im stationären Zustand kompensieren. Daher gilt:

$$F_x(t) = F_x(0) \text{ für } t \geq 0 \qquad (11)$$

Mit diesen beiden Annahmen, d.h. einer zeitabhängigen Referenzposition x* bzw. einem zeitunabhängigen Positionssollwert und einer zeitunabhängigen Lagerkraft $F_x$ kann die verallgemeinerte Unsicherheit σ für die Positionsmessung durch eine Kombination der Gleichungen (8) und (9) folgendermaßen ausgedrückt werden:

$$\sigma(t) = \frac{k_i}{k_x}\big(i_c(t) - i_c(0)\big) \qquad (12)$$

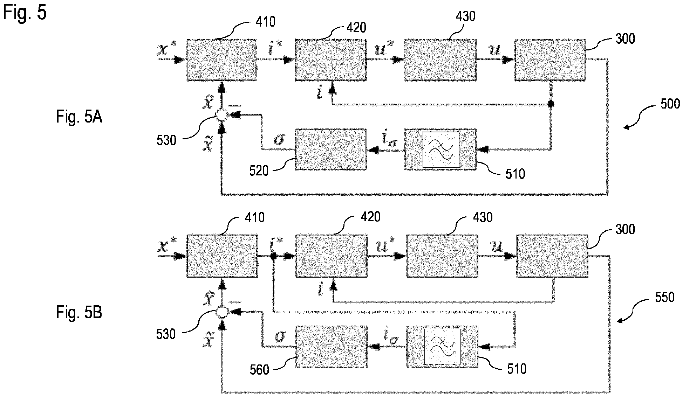

In der Praxis enthalten die beiden Ströme in der Gleichung (12) jedoch aufgrund der Aktivität der Regelung schnelle Übergänge, die nicht mit der verallgemeinerten Unsicherheit σ in Verbindung stehen und diese verfälschen würden. Daher wird ein Tiefpassfilter 510 (vgl. Fig. 5) auf das ursprüngliche Stromsignal bzw. den Istwert des Steuerstroms $i_{C(t)}$ angewendet, um ein technisch verwendbares Eingangssignal $i_\sigma(t)$ zu erhalten:

$$i_\sigma(t) = \int_0^t i_c(t) \cdot g_{lt}(t - \tau)d\tau \qquad (13)$$

wobei $g_{lb}(t)$ die Impulsantwort des Tiefpassfilters 510 repräsentiert und die Gleichung (13) den Vorgang der Tiefpassfilterung des ursprünglichen Signals $i_C(t)$ abbildet. Mit dieser Definition von $i_\sigma(t)$ kann die Gleichung (12) folgendermaßen umgeschrieben werden:

$$\sigma(t) = \frac{k_i}{k_x}\big(i_\sigma(t) - i_c(0)\big) \qquad (14)$$

Sobald die verallgemeinerte Unsicherheit σ anhand von Gleichung (14) erfasst ist, kann die wahre Position x folgendermaßen geschätzt bzw. berechnet werden:

$$\hat{x} = \tilde{x} - \sigma \qquad (15)$$

Um die Positionsdrift bzw. verallgemeinerte Unsicherheit σ zu kompensieren, verwendet die Positionsregelung anstelle der gemessenen Rückkopplung bzw. des gemessenen Istwerts der Position x̃ die geschätzte bzw. berechnete wahre Position x̂. Dies bedingt eine erweiterte Struktur für die Positionsregelung, die als Positionsregelung 500 in Fig. 5A dargestellt ist.

Im Vergleich zu der bekannten Positionsregelung 400, die in Fig. 4 dargestellt ist, umfasst die erweiterte Positionsregelung 500 von Fig. 5 zum einen den vorstehend beschriebenen Tiefpassfilter 510, der auf das gemessene Stromsignal $i_C$ angewendet wird, und einen Driftkompensator 520, der die Positionsunsicherheit bzw. Positionsdrift σ anhand von Gleichung (14) berechnet. Als Eingangsgröße erhält der Driftkompensator 520 den gemessenen Strom $i_\sigma(t)$ nach Tiefpassfilterung und einen gespeicherten Sollwert bzw. Referenzwert $i_C(0)$ für den Steuerstrom, der bei oder unmittelbar nach einer Kalibrierung des Positionsmesssystems 100 (vgl. Fig. 1) für das aktive Magnetlager 300 (vgl. Fig. 3) gemessen und in einem Speicher der Positionsregelung 500 gespeichert wurde. Bei einem Knoten 530 wird die berechnete Positionsdrift bzw. verallgemeinerte Unsicherheit σ mit der gemessenen Rückkopplung x̃ für die Position des zu lagernden Körpers 320 innerhalb des Magnetlagers 300 verknüpft, d.h. gemäß der Gleichung (15). Der Knoten 530 gibt somit einen bezüglich der Positionsdrift kompensierten Istwert x̂ an den Positionscontroller 410 aus.

Bei der Positionsregelung 500 von Fig. 5A tragen die Übergänge innerhalb der Regelung zwar aufgrund der Tiefpassfilterung 510 nicht zur Schätzung bzw. Berechnung der Positionsdrift σ bei. Wenn die Stromregelungsschleife, d.h. der Stromcontroller 420, jedoch eine PI- oder PID-Regelungsstrategie verwendet, ist der Referenz-Stromwert bzw. Sollwert für den Steuerstrom i* möglicherweise ein saubereres stationäres Signal als die Rückkopplung bzw. der Istwert i des Stroms, da i* die Übergänge innerhalb der Stromregelung nicht enthält.

Daher zeigt Fig. 5B eine Variante in der Form einer Positionsregelung 550, die anstelle des Driftkompensators 520 einen modifizierten Driftkompensator 560 umfasst, der zwar auch auf Gleichung (14) basiert, aber anstelle des gemessenen Steuerstroms $i_C$ den Referenzstrom i* bzw. Sollwert für den Stromcontroller 420 verwendet, der von dem Positionscontroller 410 ausgegeben wird. Ansonsten enthält die Variante 550 der Positionsregelung die gleichen Elemente wie die Positionsregelung 500, d.h. den Tiefpassfilter 510 und den Knoten 530 zur Verknüpfung der Driftkompensation σ mit dem gemessenen Wert x̂ für die Position des zu lagernden Körpers 320 innerhalb des Magnetlagers 300 sowie den Positionscontroller 410, den Stromcontroller 420 und den Verstärker 430.

In den vorstehenden Abschnitten wurden die Modellierung und die Kompensation der Positionsdrift erläutert. Die vorstehenden Ausführungen betrachteten das Verhalten des zu positionierenden Gegenstands 320 innerhalb des aktiven Magnetlagers 300 für Zeitpunkte t ≥ 0 unter der Annahme, dass zu dem Zeitpunkt t = 0 die Positionsdrift gleich Null ist. Im Folgenden soll ein Kalibrierungsverfahren für ein System mit aktivem Magnetlager beschrieben werden, welches beispielsweise in einer Turbomolekularpumpe verwendet wird.

Das in Fig. 1 und 2 dargestellte Positionsmesssystem bildet die wahre Position x des Targets 112 bzw. des zu positionierenden Gegenstands 320 auf das elektrische Signal $U_{sen}$ ab (vgl. Fig. 2). Daher gilt:

$$U_{sen} = f(x) \qquad (16)$$

Für den Kalibrierungsprozess des Positionsmesssystems 100 (vgl. Fig. 1) wird die Umkehrfunktion von Gleichung (16) verwendet, d.h. x = f⁻¹($U_{sen}$), die durch eine lineare Regression angenähert wird:

$$\tilde{x} = k_g \cdot U_{sen} - \delta_O \qquad (17)$$

wobei $k_g$ und $\delta_O$ die Steigung bzw. Verstärkung und den Offset nach einer erfolgreichen Kalibrierung repräsentieren.

Wenn das System mit aktivem Magnetlager abgeschaltet wird und anschließend inaktiv ist, trifft der Rotor, der mittels des aktiven Magnetlagers stabilisiert werden soll und beispielsweise Teil einer Turbomolekularpumpe ist, auf Fanglager auf. Das heißt, dass die Rotorwelle ein oder mehrere Fanglager berührt. Während des normalen Betriebs des Systems mit aktivem Magnetlager hingegen wird der Rotor in der geometrischen Mitte der Fanglager positioniert.

Daher erfolgt die Kalibrierung des Positionsmesssystems 100 derart, dass eine gemessene Rückkopplung bzw. Positionsmessung bei x̃ = 0 der Position bei der geometrischen Mitte zwischen zwei Fanglagern entspricht. Die Berührung des Rotors bzw. der Rotorwelle mit den Fanglagern auf beiden Seiten der geometrischen Mitte kann verwendet werden, um die Faktoren $k_g$ und $\delta_O$ zu ermitteln und dadurch den Messwert bei x̃ = 0 einer entsprechenden Spannung $U_{sen}$ zuzuordnen. Wenn die mechanische Öffnung zwischen der geometrischen Mitte zwischen den Fanglagern und einem jeweiligen Fanglager mit $\delta_{mec}$ bezeichnet wird und eine mechanische Berührung zwischen dem Rotor bzw. der Rotorwelle und dem jeweiligen Fanglager bei zwei extremen Messpositionen mit x = $\delta_{mec}$ bzw. x = -$\delta_{mec}$ auftritt, erhält man für den jeweiligen mechanischen Kontakt unter Berücksichtigung der Gleichung (17) die folgenden Beziehungen:

$$-\delta_{mec} = k_g \cdot U_{sen}^{min} - \delta_O \qquad (18)$$

$$\delta_{mec} = k_g \cdot U_{sen}^{max} - \delta_O \qquad (19)$$

Durch eine Umformung der Gleichungen (18) und (19) können die Verstärkung bzw. die Steigung und der Offset des Positionsmesssystems 100 folgendermaßen berechnet werden:

$$k_g = 2 \frac{\delta_{mec}}{U_{sen}^{max} - U_{sen}^{min}} \qquad (20)$$

$$\delta_O = \delta_{mec} \frac{U_{sen}^{max} + U_{sen}^{min}}{U_{sen}^{max} - U_{sen}^{min}} \tag{21}$$

Die Signale $U_{sen}^{min}$ und $U_{sen}^{max}$ sind hierbei nur durch die mechanischen Bedingungen gegeben, wobei entsprechend der Gleichung (16) gilt: $U_{sen}^{min} = f(-\delta_{mec})$ und $U_{sen}^{max} = f(\delta_{mec})$. Die Bezeichnung "min" bedeutet lediglich, dass der Abtastwert von $U_{sen}$ dann erfasst wird, wenn sich die mechanische Position des Rotors bei dem erwarteten Minimum befindet, d.h. bei $-\delta_{mec}$. Der Wert der Spannung $U_{sen}^{min}$ an sich muss nicht notwendigerweise innerhalb des gesamten Messbereichs der Spannung ein Minimum sein, sondern er kann auch ein Maximum sein. In diesem Fall beschreibt die Gleichung (16) das Verhalten eines Positionsmesssystems mit einer inversen Proportionalität, d.h. mit einer negativen Steigung, da das Vorzeichen der Verstärkung bzw. Steigung $k_g$ entsprechend der Gleichung (20) automatisch negativ wird. Die gemessene Rückkopplung $\tilde{x}$ spiegelt jedoch auch in diesem Fall die tatsächliche Position x des Rotors während der Kalibrierung wider.

Die vorstehenden Ausführungen bezüglich des Positionsmesssystems 100 (vgl. Fig. 1), des aktiven Magnetlagers 300 einschließlich des zu positionierenden Körpers 320 (vgl. Fig. 3), bezüglich der Positionsdrift und der Kalibrierung des Positionsmesssystems 100 gelten für eine Dimension, beispielsweise entlang der x-Achse, die in Fig. 3 dargestellt ist. Für eine reale Positionsregelung einer Turbomolekularpumpe mittels eines aktiven Magnetlagers müssen jedoch fünf Achsen bezüglich der Bewegung eines Rotors 600 stabilisiert werden, wie dieser in Fig. 6 dargestellt ist.

Durch das aktive Magnetlager wird der Rotor 600 sowohl in axialer Richtung (z-Achse in Fig. 6A) als auch in radialer Richtung senkrecht zur axialen Richtung während des Betriebs der Vakuumpumpe in einem schwebenden Zustand gehalten. Das bedeutet, dass der Rotor sowohl gegenüber Verschiebungen bzw. Translationen in axialer Richtung und in radialer Richtung als auch gegenüber einer Verkippung bzw. Rotation bezüglich der axialen Richtung bzw. Achse mittels des aktiven Magnetlagers stabilisiert wird. Um die Verkippung bzw. Rotation zu verhindern, ist eine Stabilisierung in zwei radialen Ebenen 620, 630 erforderlich, d.h. entlang jeweils zweier Achsen $x_1$ und $y_1$ in der Ebene 620 und jeweils zweier Achsen $x_2$ und $y_2$ in der Ebene 630 (vgl. Fig. 6A).

Die vorstehende Analyse einschließlich der Formeln bezüglich einer einzelnen Achse bzw. Dimension lassen sich direkt auf die axiale Richtung bzw. z-Achse 610 anwenden. Für die vier weiteren Achsen $x_1$ und $y_1$ bzw. $x_2$ und $y_2$ in radialer Richtung sind die geometrischen Verhältnisse in Fig. 6A dargestellt, während die Anordnung von radialen Lagerelementen 640 des aktiven Magnetlagers 300 einschließlich Positionssensoren 650 bezogen auf den Rotor 600 in Fig. 6B dargestellt ist. Für die axiale Richtung bzw. z-Achse umfasst das aktive Magnetlager zusätzlich zwei axiale Lagerelemente, die in Fig. 6 nicht dargestellt sind.

Wie man in Fig. 6A erkennen kann, erstrecken sich die vier weiteren Achsen für eine mögliche Bewegung des Rotors 600 jeweils in den zwei Ebenen 620, 630, die parallel zueinander und senkrecht zu der axialen Richtung bzw. z-Achse 610 verlaufen. Die Ebene 620 wird durch die $x_1$-Achse 622 und die $y_1$-Achse 624 aufgespannt, während die parallele Ebene 630 durch die $x_2$-Richtung 632 und die $y_2$-Richtung 634 aufgespannt wird. In Fig. 6B ist eine Draufsicht entlang der axialen Richtung bzw. z-Achse 610 dargestellt, d.h. als Draufsicht auf eine jeweilige der Ebenen 620, 630. Der Rotor 600 befindet sich in dieser Darstellung in einer geometrischen Mitte zwischen den vier radialen Lagerelementen 640, denen jeweils einer der Positionssensoren 650 zugeordnet sind.

Der Rotor 600 dreht sich gegen den Uhrzeigersinn, wenn er entlang der z-Achse 610 von der Hochvakuumseite der Turbomolekularpumpe aus betrachtet wird. Die Drehrichtung des Rotors 600 ist in Fig. 6A durch den Pfeil 615 veranschaulicht. Umgekehrt gesehen definiert diese Drehung des Rotors 600 die positive z-Achse. Bezogen auf die z-Achse 610 sind die rechtwinklig zu dieser verlaufenden Ebenen 620, 630 bzw. die Koordinatensysteme mit jeweiligen x- und y-Achsen in radialer Richtung senkrecht zur z-Achse 610 definiert, welche umgekehrt betrachtet die Ebenen 620, 630 aufspannt. Es ist jeweils eine Stabilisierung des Rotors 600 in den zwei Ebenen 620, 630 erforderlich, um eine Verkippung bzw. Rotation des Rotors 600 bezogen auf die z-Achse 610 zu verhindern.

In der oberen radialen Ebene mit der $x_1$-Achse 622 und der $y_1$-Achse 624 wirken radiale Kräfte $F_{x,1}$ und $F_{y,1}$ auf den Rotor 600, während in der unteren radialen Ebene 630 mit der $x_2$-Achse 632 und der $y_2$-Achse 634 die radialen Kräfte $F_{x,2}$ und $F_{y,2}$ auf den Rotor 600 wirken.

Um das Positionsmesssystem zu kalibrieren, das die Sensoren 650 umfasst (vgl. Fig. 6B), wird der Rotor 600 mittels der radialen Lagerelemente 640 wie vorstehend beschrieben auf eine solche Weise verschoben, dass ein mechanischer Kontakt zwischen dem Rotor 600 und einem der Fanglager der Vakuumpumpe auftritt. Dadurch wird sichergestellt, dass die jeweiligen Abtastwerte der Spannung $U_{sen}$ für jede der fünf Achsen die Bewegung des Rotors 600 an jeweils zwei mechanischen Extrempunkten erfasst werden. Wenn die mechanischen Öffnungen bzw. Abstände $\delta_{R1}$, $\delta_{R2}$ und $\delta_z$ der radialen Fanglager bezogen auf die jeweiligen geometrische Mitte in den Ebenen 620 und 630 bzw. entlang der z-Achse 610 in axialer Richtung gegeben sind, können die jeweilige Steigung bzw. jeweilige Verstärkung und der jeweilige Offset für jede Achse wie folgt berechnet werden.

Die fünf Verstärkungen bzw. Steigungen für jede Achse sind dann gegeben durch:

$$k_{g,x_1} = 2 \frac{\delta_{R1}}{U_{sen,x_1}^{max} - U_{sen,x_1}^{min}}$$

$$k_{g,y_1} = 2 \frac{\delta_{R1}}{U_{sen,y_1}^{max} - U_{sen,y_1}^{min}}$$

$$k_{g,x_2} = 2 \frac{\delta_{R2}}{U_{sen,x_2}^{max} - U_{sen,x_2}^{min}} \qquad (22)$$

$$k_{g,y_2} = 2 \frac{\delta_{R2}}{U_{sen,y_2}^{max} - U_{sen,y_2}^{min}}$$

$$k_{g,z} = 2 \frac{\delta_z}{U_{sen,z}^{max} - U_{sen,z}^{min}}$$

Die fünf Offsets für die jeweilige Achse sind gegeben durch:

$$\delta_{O,x_1} = \delta_{R1} \frac{U_{sen,x_1}^{max} + U_{sen,x_1}^{min}}{U_{sen,x_1}^{max} - U_{sen,x_1}^{min}}$$

$$\delta_{O,y_1} = \delta_{R1} \frac{U_{sen,y_1}^{max} + U_{sen,y_1}^{min}}{U_{sen,y_1}^{max} - U_{sen,y_1}^{min}}$$

$$\delta_{O,x_2} = \delta_{R2} \frac{U_{sen,x_2}^{max} + U_{sen,x_2}^{min}}{U_{sen,x_2}^{max} - U_{sen,x_2}^{min}} \qquad (23)$$

$$\delta_{O,y_2} = \delta_{R2} \frac{U_{sen,y_2}^{max} + U_{sen,y_2}^{min}}{U_{sen,y_2}^{max} - U_{sen,y_2}^{min}}$$

$$\delta_{O,z} = \delta_z \frac{U_{sen,z}^{max} + U_{sen,z}^{min}}{U_{sen,z}^{max} - U_{sen,z}^{min}}$$

Mit den vorstehenden zehn Skalierungsfaktoren, d.h. den fünf Steigungen und den fünf Offsets, kann die Positionsrückkopplung des Rotors 600, d.h. der Istwert für die jeweilige Koordinate $x_1$, $y_1$, $x_2$, $y_2$ und z für die räumliche Lage des Rotors 600 anhand der Ausgangsspannung des Positionsmesssystems folgendermaßen berechnet werden:

$$\tilde{x}_1 = k_{g,x_1} \cdot U_{sen,x_1} - \delta_{O,x_1}$$

$$\tilde{y}_1 = k_{g,y_1} \cdot U_{sen,y_1} - \delta_{O,y_1}$$

$$\tilde{x}_2 = k_{g,x_2} \cdot U_{sen,x_2} - \delta_{O,x_2} \qquad (24)$$

$$\tilde{y}_1 = k_{g,y_1} \cdot U_{sen,y_2} - \delta_{O,y_2}$$

$$\tilde{z} = k_{g,z} \cdot U_{sen,z} - \delta_{O,z}$$

Der vorstehend beschriebene Kalibrierungsprozess für das Positionserfassungssystem mit den Sensoren 650 muss für die Turbomolekularpumpe erstmalig ausgeführt werden, bevor diese in Betrieb genommen wird. Nach einem erfolgreichen Kalibrierungsprozess werden die Skalierungsfaktoren gemäß den Gleichungen (22) und (23) in einem nicht-flüchtigen Speicher abgelegt, so dass diese für eine anschließende Betriebsphase der Turbomolekularpumpe zur Verfügung stehen.

Weitere Kalibrierungsphasen, in denen der vorstehend beschriebene Kalibrierungsprozess zum Aktualisieren der Skalierungsfaktoren gemäß den Gleichungen (22) und (23) ausgeführt wird, können zu einer beliebigen Zeit während des Lebenszyklus der Turbomolekularpumpe auf Anforderung ausgeführt werden. Beispielsweise kann eine erneute Kalibrierung des Positionsmesssystems nach einem Aufsetzen des Rotors 600 bei hoher Drehzahl erforderlich sein. Während des normalen Betriebs der Turbomolekularpumpe, in welchem der Rotor 600 mittels der axialen Lagerelemente und der Lagerelemente 640 des aktiven Magnetlagers 300 in einem frei schwebenden Zustand gehalten wird, wird die vorstehend beschriebene Kompensation der Positionsdrift unter Verwendung der gespeicherten Skalierungsfaktoren gemäß den Gleichungen (22) und (23) angewendet.

Das Kalibrierungsverfahren kann allgemein schematisch durch die folgenden Schritte beschrieben werden:

a) Starten der Aufzeichnung von Ausgangssignalen für alle fünf Achsen des Positionsmesssystems, beispielsweise der Signale $U_{sen,x_1}$, $U_{sen,y_1}$, $U_{sen,x_2}$, $U_{sen,y_2}$ und $U_{sen,z}$;

b) Zuführung dieser Ausgangssignale des Positionsmesssystems zu einer Extremwert-Ermittlungseinheit, die ein technisches Mittel darstellt, um Extremwerte für eine Historie bzw. einen zeitlichen Verlauf von zugewiesenen Signalen seit ihrer Aktivierung zu detektieren und zu speichern;

c) Betreiben der axialen Lagerelemente und der radialen Lagerelemente 640 für jede der Regelungs- bzw. Stabilisierungsachsen in einer beliebigen Reihenfolge, so dass für jede Achse der Bewegung des Rotors 600 (vgl. Fig. 6) ein mechanischer Kontakt zwischen dem Rotor 600 und einem jeweiligen Fanglager in beiden Richtungen auftritt;

d) Verwenden der zehn Extremwerte für die fünf Stabilisierungsachsen, welche von der Extremwert-Ermittlungseinheit bereitgestellt werden, zusammen mit den vorgegebenen mechanischen Öffnungen bzw. Abständen $\delta_{R1}$, $\delta_{R2}$ und $\delta_z$ bezogen auf alle Fanglager, um die Skalierungsfaktoren für die Kalibrierung entsprechend den Gleichungen (22) und (23) zu berechnen.

In der Praxis kann die Qualität der Kalibrierung auf verschiedene Weisen verbessert werden. Wie man anhand der Gleichungen (22) und (23) erkennen kann, bestimmt die Signalqualität der Ausgangssignale des Positionsmesssystems die Genauigkeit der Kalibrierung. Dies bedeutet, dass die erfassten Extremwerte für die Messung entlang jeder Stabilisierungsachse die Ergebnisse, d.h. die Skalierungsfaktoren, stark beeinflussen. Da ein jeweiliger mechanischer Kontakt erforderlich ist, um die Extremwerte zu erhalten, erzeugt der Kalibrierungsprozess einige Übergänge in den Signalen, so dass die Extremwerte gemäß der Historie bzw. gemäß dem zeitlichen Verlauf im Allgemeinen größer als Werte in einem stationären Zustand sind, die zur Berechnung der Skalierungsfaktoren verwendet werden sollten. Eine Verbesserung kann durch eine Tiefpass-Filterung der Ausgangssignale erreicht werden, bevor diese der Extremwert-Ermittlungseinheit zugeführt werden. Hochfrequente Übergänge können dadurch gedämpft werden.

Eine weitere Verbesserung kann durch die Optimierung der Sequenz des jeweiligen mechanischen Kontakts an den jeweiligen Fanglagern erreicht werden. Einerseits kann verhindert werden, dass der Rotor 600 (vgl. Fig. 6) sowohl auf die Fanglager in axialer Richtung als auch auf die Fanglager in radialer Richtung auf eine ungesteuerte Weise auftrifft.

Wenn während des beabsichtigten Kontakts des Rotors 600 mit den radialen Fanglagern, d.h. mit den Fanglagern in der jeweiligen x- und y-Richtung 622, 624 bzw. 632, 634 in den Ebenen 620, 630, gleichzeitig ein Kontakt des Rotors 600 mit einem Fanglager in axialer Richtung bzw. in der z-Richtung 610 auftritt, was insbesondere bei einer vertikalen Installation von Turbomolekularpumpen der Fall ist, spiegeln die Messsignale in radialer Richtung möglicherweise nicht den wahren Zustand des mechanischen Kontakts an den radialen Fanglagern wider. Daher ist es vorteilhaft, die Schweberegelung in der axialen Richtung durch eine Aktivierung der jeweiligen axialen Lagerelemente des aktiven Magnetlagers einzuschalten, bevor der beabsichtigte mechanische Kontakt des Rotors 600 mit den jeweiligen radialen Fanglagern durch eine jeweilige Aktivierung der radialen Lagerelemente 640 hergestellt wird.

Zusätzlich kann die Sequenz oder Reihenfolge des radialen mechanischen Kontakts weiter optimiert werden, um ein hartes mechanisches Auftreffen zu verhindern, wenn ein Übergang von einer Achse zur nächsten erfolgt, um den nächsten Extremwert für die nächste Achse der Bewegung bzw. Stabilisierung des Rotors 600 zu erhalten. Eine solche weitere Optimierung kann erreicht werden, indem stets diejenigen radialen Lagerelemente 640 betrieben werden, die einander benachbart sind. Wenn man von der Anordnung der radialen Lagerelemente 640 von Fig. 6B ausgeht, kann eine mögliche Betriebssequenz für die Lagerelemente 640 durch die folgenden Schritte beschrieben werden:

i) Betrieb ausschließlich derjenigen Lagerelemente 640, die eine Verschiebung entlang X1+/X2+ bewirken, d.h. der Lagerelemente 640 auf der rechten Seite von Fig. 6B in der jeweiligen Ebene 620, 630;

ii) Betrieb derjenigen Lagerelemente 640, die eine Verschiebung in Richtung X1+/X2+ und Y1+/Y2+ bewirken, d.h. Betrieb der rechten und der oberen Lagerelemente 640 in Fig. 6B in der jeweiligen Ebene 620, 630;

iii) Betrieb ausschließlich derjenigen Lagerelemente 640, die eine Verschiebung in Richtung Y1+/Y2+ bewirken, d.h. der oberen Lagerelemente 640 von Fig. 6B in der jeweiligen Ebene 620, 630;

iv) Betrieb derjenigen Lagerelemente 640, die eine Verschiebung in Richtung Y1+/Y2+ und X1-/X2- bewirken, d.h. Betrieb der oberen und linken Lagerelemente 640 von Fig. 6B in der jeweiligen Ebene 620, 630;

v) Betrieb derjenigen Lagerelemente 640, die eine Verschiebung in Richtung X1-/X2- bewirken, d.h. Betrieb der linken Lagerelemente 640 von Fig. 6B in der jeweiligen Ebene 620, 630;

vi) Betrieb der Lagerelemente 640, die eine Verschiebung in Richtung X1-/X2- und Y1-/Y2- bewirken, d.h. Betrieb der linken und unteren Lagerelemente 640 in der jeweiligen Ebene 620, 630;

vii) Betrieb ausschließlich derjenigen Lagerelemente 640, die eine Verschiebung in Richtung Y1-/Y2- bewirken, d.h. Betrieb der unteren Lagerelemente 640 von Fig. 6B in der jeweiligen Ebene 620, 630; und

viii) Betrieb derjenigen Lagerelemente 640, die eine Verschiebung in Richtung Y1-/Y2- und in Richtung X1+/X2+ bewirken, d.h. Betrieb der unteren und rechten Lagerelemente 640 von Fig. 6B in der jeweiligen Ebene 620, 630.

Insgesamt kann eine Ausführung des Kalibrierungsverfahrens in den folgenden acht Schritten zusammengefasst werden:

1. Start der Aufzeichnung von Ausgangssignalen bezüglich aller fünf Achsen eines Positionsmesssystems;

2. Anwenden einer Tiefpassfilterung auf diese Ausgangssignale;

3. Zuführen der gefilterten Positionssignale zu einer Extremwert-Ermittlungseinheit, die ein technisches Mittel zum Detektieren und Speichern von Extremwerten für eine Historie oder einen zeitlichen Ablauf von zugewiesenen Signalen seit deren Aktivierung ist;

4. Betreiben der axialen Lagerelemente auf abwechselnde Weise, so dass ein jeweiliger mechanischer Kontakt zwischen dem Rotor 600 (vgl. Fig. 6) und jeweiligen axialen Fanglagern in beiden axialen Richtungen auftritt;

5. Berechnen der vorstehend beschriebenen Skalierungsfaktoren für die axiale Richtung bzw. z-Achse 610 (vgl. Fig. 6) anhand der zwei an der axialen Achse erhaltenen Extremwerte, die von der Extremwert-Ermittlungseinheit bereitgestellt werden;

6. Aktivieren der Schweberegelung für den Rotor 600 in der axialen Richtung bzw. entlang der z-Achse 610, so dass kein mechanischer Kontakt zwischen dem Rotor 600 und den axialen Fanglagern besteht;

7. Betreiben der radialen Lagerelemente 640 nacheinander, bis alle radialen Lagerelemente 640 zumindest einmal aktiviert worden sind, wobei zu einem beliebigen Zeitpunkt für die vier Richtungen x1, y1, x2, y2 in den radialen Ebenen 620, 630 die jeweils aktivierten radialen Lagerelemente 640 (vgl. Fig. 6) entweder alle eine Verschiebung des Rotors 600 in einer Richtung oder in zwei benachbarten Richtungen bewirken und das nächste zu aktivierende Lagerelemente 640 derart ausgewählt wird, dass es dem momentan aktivierten Lagerelemente 640 benachbart ist; und

8. Berechnen der Skalierungsfaktoren für die radialen Achsen anhand der von der Extremwert-Ermittlungseinheit erhaltenen weiteren acht Extremwerte bezüglich der radialen Achsen.

Eine Schweberegelung bzw. Positionsregel für den Rotor 600 innerhalb einer Turbomolekularpumpe unter Verwendung aktiver Magnetlager ist grundsätzlich bekannt. Im Folgenden wird eine erweiterte Schweberegelung mit Kompensation einer Positionsdrift beschrieben, die durch beliebige Unsicherheiten oder Ungenauigkeiten in dem Positionsmesssystem für den Rotor einer Turbomolekularpumpe hervorgerufen wird.

Wenn verteilte Positionscontroller verwendet werden, wie dies beispielsweise bei einem Rotor einer Turbomolekularpumpe der Fall ist, der schwebend mittels aktiver Magnetlager gelagert wird, kann jede Steuerungs- oder Stabilisierungsachse unabhängig behandelt werden. Dies bedeutet, dass die vorstehend beschriebene Kompensation der Positionsdrift, die in Fig. 5 für eine Dimension dargestellt und vorstehend beschrieben ist, unmittelbar auf den Fall mit fünf Stabilisierungsachsen erweitert werden kann.

Die vorstehende Gleichung (14) kann entsprechend gemäß den folgenden Gleichungen verallgemeinert werden, die somit eine Berechnung oder Abschätzung der Positionsdrift für alle fünf Achsen der Bewegung des Rotors 600 bzw. Stabilisierungsachsen bereitstellen:

$$\sigma_{x_1}(t) = \frac{k_{i,1}}{k_{x,1}}\left(i_{\sigma,x_1}(t) - i_{\sigma,x_1}(0)\right)$$

$$\sigma_{y_1}(t) = \frac{k_{i,1}}{k_{y,1}}\left(i_{\sigma,y_1}(t) - i_{\sigma,y_1}(0)\right)$$

$$\sigma_{x_2}(t) = \frac{k_{i,2}}{k_{x,2}}\left(i_{\sigma,x_2}(t) - i_{\sigma,x_2}(0)\right) \qquad (25)$$

$$\sigma_{y_2}(t) = \frac{k_{i,2}}{k_{y,2}}\left(i_{\sigma,y_2}(t) - i_{\sigma,y_2}(0)\right)$$

$$\sigma_z(t) = \frac{k_{i,z}}{k_{x,z}}\left(i_{\sigma,z}(t) - i_z(0)\right)$$

In den Gleichungen (25) repräsentieren die Faktoren $k_{x,1}$, $k_{x,2}$ und $k_{x,z}$ die Kraft-Verschiebungs-Faktoren der radialen Lagerelemente 640 (vgl. Fig. 6B) in den Ebenen 620, 630 (vgl. Fig. 6A) bzw. für die axiale Magnetlagerung. Auf ähnliche Weise repräsentieren die Faktoren $k_{i,1}$, $k_{i,2}$ und $k_{i,z}$ die Kraft-Strom-Faktoren.

Die Anfangswerte $i_{x,1}(0)$, $i_{y,1}(0)$, $i_{x2}(0)$, $i_{y2}(0)$ und $i_z(0)$ sind jeweilige "Schnappschüsse" für die Ströme der Regelung, d.h. für die Ströme durch die jeweiligen Magnetlager an den jeweiligen Achsen, welche unmittelbar nach einer erfolgreichen Kalibrierung erfasst werden. Sie werden bis zur nächsten Kalibrierung in einem nicht-flüchtigen Medium gespeichert.

Die Signale $i_{\sigma,x_1}(t)$, $i_{\sigma,y_1}(t)$, $i_{\sigma,x_2}(t)$, $i_{\sigma,y_2}(t)$ und $i_{\sigma,z}(t)$ sind die Tiefpass-gefilterten Werte der Regelungsströme für die jeweilige Achse. Je nach Variante der Implementierung der Positionsregelung (vgl. Fig. 5A und Fig. 5B) können die Regelungsströme, die zu filtern sind, entweder die gemessene Rückkopplung des Stroms bzw. der Strom-Istwert (vgl. Fig. 5A) oder der Referenzstrom bzw. Strom-Sollwert (vgl. Fig. 5B) sein.

Für die Positionsregelung unter Verwendung der Kompensation der Positionsdriften werden die Rückkopplungswerte bzw. Istwerte der Positionscontroller durch eine Verallgemeinerung der vorstehenden Gleichung (15) erhalten:

$$\hat{x}_1 = \tilde{x}_1 - \sigma_{x_1}$$

$$\hat{y}_1 = \tilde{y}_1 - \sigma_{y_1}$$

$$\hat{x}_2 = \tilde{x}_2 - \sigma_{x_2} \tag{26}$$

$$\hat{y}_2 = \tilde{y}_2 - \sigma_{y_2}$$

$$\hat{z} = \tilde{z} - \sigma_z$$

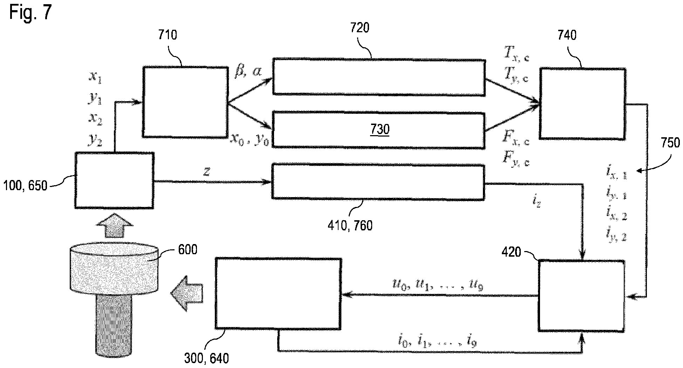

Die Schweberegelung für den Rotor 600 einer Turbomolekularpumpe kann aufwändig und komplex werden, wenn sich der Rotor mit einer hohen Drehzahl dreht. Dies ist durch die gyroskopischen Effekte bedingt, die eine Kopplung aller radialen Achsen bewirken. Eine besondere Weise zum Regeln der radialen Bewegungen erfolgt in einem Schwerpunkt-Bezugssystem des Rotors 600, bei dem die radialen Positionen in ihre äquivalente Darstellung in einem Koordinatensystem mit dem Schwerpunkt als Ursprung transformiert werden. Wie in Fig. 7 gezeigt ist, wird die Bewegungsregelung in eine Regelung 720 einer Kippbewegung und in eine Regelung 730 einer Translationsbewegung aufgeteilt, d.h. nach der Transformation in das Schwerpunkt-Bezugssystem.

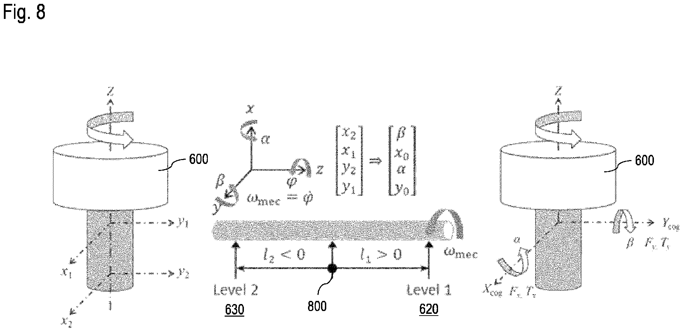

Im Einzelnen werden die von dem Positionssensor 100, 650 (vgl. auch Fig. 1 und Fig. 6) erfassten Positionskoordinaten des Rotors 600, d.h. Werte der Koordinaten $x_1$, $y_1$, $x_2$, $y_2$ in den jeweiligen Ebenen 620, 630, die in Fig. 6 dargestellt sind, bei 710 einer Schwerpunkttransformation unterworfen, welche die Koordinaten $x_0$, $y_0$ des Schwerpunkts 800 des Rotors 600 (vgl. Fig. 8) und die Kippwinkel $\alpha$, $\beta$ bezüglich der Drehachse bzw. z-Achse 610 ausgibt. Die Transformation von den in Fig. 6 dargestellten Bezugssystemen in das Schwerpunkt-Bezugssystem ist in Fig. 8 dargestellt, in der auch die Winkel $\alpha$, $\beta$ und die x- bzw. y-Koordinatenachsen $X_{cog}$ bzw. $Y_{cog}$ im Schwerpunktsystem veranschaulicht sind.

Der Controller 720 für die Kippbewegung erhält nach der Schwerpunkttransformation bei 710 die beiden Kippwinkel $\alpha$, $\beta$, während der Controller 730 für die Translationsbewegung die Koordinaten $x_0$, $y_0$ des Schwerpunkts des Rotors 600 nach der Schwerpunkttransformation bei 710 erhält. Die Ausgabe des Controllers 720 für die Kippbewegung sind die Drehmomente $T_{x,c}$ und $T_{y,c}$ am Schwerpunkt, während die Ausgabe des Controllers 730 für die Translationsbewegung die Kräfte $F_{x,c}$ bzw. $F_{y,c}$ am Schwerpunkt des Rotors 600 sind. Diese Drehmomente und Kräfte werden mit einer inversen Schwerpunkttransformation bei 740 wieder in Sollwerte 750 für Ströme umgewandelt, die wiederum der Stromregelung 420 zugeführt werden, wie diese in Fig. 4 dargestellt und vorstehend erläutert ist.

Im Vergleich zu der in Fig. 4 dargestellten Regelungsstrategie umfasst die Regelung in dem Schwerpunkt-Bezugssystem gemäß Fig. 7 die zusätzliche Schwerpunkttransformation 710 vor den Bewegungsregelungen 720, 730 und die inverse Schwerpunkttransformation bei 740 nach den Bewegungsregelungen 720, 730. Wie man in Fig. 7 erkennen kann, entspricht die Struktur der gesamten Regelung derjenigen von Fig. 4, wenn man die Bewegungscontroller 720, 730 und die Schwerpunkttransformationen 710, 740 als einen verallgemeinerten Controllerblock auffasst.

Daher ist die vorstehend beschriebene Kompensation der Positionsdrift auch für die Regelungsstrategie von Fig. 7 gültig. Die gemessenen Positionswerte $x_1$, $y_1$, $x_2$, $y_2$ werden vor der Schwerpunkttransformation bei 710 wie bei den Gleichungen (14) und (26) mit der jeweiligen Positionsdrift $\sigma$ modifiziert, die anhand der Regelungsströme ermittelt wird, welche bei der Regelung von Fig. 7 nach der inversen Schwerpunkttransformation erhalten werden. Mit anderen Worten sind die Gleichungen (25) und (26) auch für die Regelung von Fig. 7 sinngemäß gültig.

Zusätzlich ist es möglich, dass die Kompensation der Positionsdrift im Schwerpunkt-Bezugssystem erfolgt. Dies ist deshalb vorteilhaft, dass Referenzkräfte und Referenzdrehmomente bzw. Sollwerte für Kräfte und Drehmomente zusätzliche Informationen bezüglich der räumlichen Ausrichtung des Rotors 600 bereitstellen. Mit einer ähnlichen Herleitung wie bei Gleichung (14) können die jeweiligen Positionsdriften im Schwerpunkt-Bezugssystem folgendermaßen ausgedrückt werden:

$$\sigma_{x_0}(t) = \frac{1}{k_{x,trans}}\left(F_{\sigma,x_0}(t) - F_{x,c}(0)\right)$$

$$\sigma_{y_0}(t) = \frac{1}{k_{x,trans}}\left(F_{\sigma,y_0}(t) - F_{y,c}(0)\right)$$

$$\sigma_{\alpha}(t) = \frac{1}{k_{x,tilt}}\left(T_{\sigma,\alpha}(t) - T_{x,c}(0)\right) \qquad (27)$$

$$\sigma_{\beta}(t) = \frac{1}{k_{x,tilt}}\left(T_{\sigma,\beta}(t) - T_{y,c}(0)\right)$$

Bei diesen Gleichungen ist $k_{x,trans}$ der Translationskraft-Verschiebungs-Faktor, während $k_{x,tilt}$ der Kippdrehmoment-Neigungs-Faktor ist. Beide Faktoren können anhand der radialen Kraft-Verschiebungs-Faktoren $k_{x,1}$ und $k_{x,2}$ berechnet werden. Die Anfangswerte $F_{x,c}(0)$, $F_{y,c}(0)$, $T_{x,c}(0)$ und $T_{y,c}(0)$ sind wiederum die "Schnappschüsse" der Referenzwerte bzw. Sollwerte, die mittels der Bewegungscontroller 720, 730 nach einer erfolgreichen Kalibrierung ermittelt werden, wobei $F_{x,c}(0)$ und $F_{y,c}(0)$ die Referenzkräfte bzw. Sollkräfte sind, die auf den Schwerpunkt des Rotors 600 wirken, während $T_{x,c}(0)$ und $T_{y,c}(0)$ die Referenzdrehmomente bzw. Solldrehmomente sind, die auf die Achsen wirken. Die Signale $F_{\sigma,x0}(t)$, $F_{\sigma,y0}(t)$, $T_{\sigma,\alpha}(t)$ und $T_{\sigma,\beta}(t)$ sind die Tiefpass-gefilterten Werte der vorstehend erwähnten Referenzwerte bzw. Sollwerte, die von den Bewegungscontrollern 720, 730 erhalten werden.

Wie bei der vorstehenden Notation beschreibt $[\tilde{x}_0, \tilde{y}_0, \tilde{\alpha}, \tilde{\beta}]$ die gemessene Rückkopplung nach der Schwerpunkttransformation bei 710 für die Motorcontroller 720, 730. Die geschätzten bzw. berechneten Werte, welche die gemessenen Istwerte modifizieren, sind folgendermaßen gegeben:

$$\hat{x}_0 = \tilde{x}_0 - \sigma_{x_0}$$

$$\hat{y}_0 = \tilde{y}_0 - \sigma_{y_0}$$

$$\hat{\alpha} = \tilde{\alpha} - \sigma_{\alpha} \qquad (28)$$

$$\hat{\beta} = \tilde{\beta} - \sigma_{\beta}$$

Bei der radialen Bewegungsregelung in dem Schwerpunkt-Bezugssystem werden somit die berechneten Werte bzw. modifizierten Istwerte entsprechend den Gleichungen (28) verwendet. Für die axiale Bewegungsregelung entlang der z-Achse wird hingegen die gleiche Regelungsstrategie mit einem axialen Bewegungscontroller 410, 760 verwendet (vgl. auch Fig. 7), wie diese vorstehend beschrieben ist, da die axiale Bewegung von der radialen Bewegung entkoppelt ist und eine Änderung der Regelungsstrategie für die axiale Bewegung folglich nicht erforderlich ist, selbst wenn bei der radialen Regelungsstrategie eine Transformation in das Schwerpunktsystem erfolgt.

Bezugszeichenliste

| | |
|---|---|
| 100 | Positionsmesssystem |
| 102 | Referenzspule |
| 104 | Sensorspule |
| 106 | Leiterplatine |
| 108 | Schaltung zum Evaluieren der Position |
| 110 | Rotorwelle |
| 112 | Target |
| 120 | z-Richtung |
| 210 | Operationsverstärker |
| 220 | Ausgang der Schaltung zum Evaluieren der Position |
| 300 | aktives Magnetlager |
| 310 | x-Richtung |
| 320 | zu positionierender Körper bzw. Lagerlast |

| | |
|---|---|
| 330 | Elektromagnet P |
| 332 | Spule des Elektromagneten P |
| 334 | Kern des Elektromagneten |
| 340 | Elektromagnet N |
| 342 | Spule des Elektromagneten N |
| 400 | Regelung für ein aktives Magnetlager |
| 410 | Positionscontroller |
| 420 | Stromcontroller |
| 430 | Verstärker |
| 510 | Tiefpassfilter |
| 520 | Driftkompensator |
| 530 | Knoten |
| 560 | Driftkompensator |
| 600 | Rotor einer Turbomolekularpumpe |
| 610 | z-Achse bzw. axiale Richtung |
| 615 | Drehrichtung des Rotors |
| 620 | obere radiale Ebene |
| 622 | $x_1$-Achse |
| 624 | $y_1$-Achse |
| 630 | untere radiale Ebene |
| 632 | $x_2$-Achse |
| 634 | $y_2$-Achse |
| 640 | radiale Lagerelemente des aktiven Magnetlagers |
| 650 | Positionssensor |
| 710 | Schwerpunkttransformation |
| 720 | Controller für die Kippbewegung |
| 730 | Controller für die Translationsbewegung |
| 740 | inverse Schwerpunkttransformation |
| 750 | Referenzströme |
| 760 | Regelung der axialen Bewegung |
| 800 | Schwerpunkt des Rotors |

**Patentansprüche**

1. Vakuumpumpe, insbesondere Turbomolekularpumpe, umfassend:

   einen Rotor (600),
   ein aktives Magnetlager (300) und
   eine Positionsregelung (400), die mit dem aktiven Magnetlager (300) in funktionaler Verbindung steht, um den Rotor (600) während des Betriebs der Vakuumpumpe mittels des aktiven Magnetlagers (300) in einer vorbestimmten räumlichen Lage zu halten,
   wobei ein jeweiliger Istwert für mindestens eine Koordinate der räumlichen Lage des Rotors (600) einen gemessenen Wert der Koordinate und eine berechnete Koordinatenabweichung umfasst,
   wobei die Positionsregelung (400) ausgebildet ist, die Koordinatenabweichung anhand mindestens eines Kontrollsignals zu ermitteln, das mit Kräften in Beziehung steht, die durch das aktive Magnetlager (300) ausgeübt werden.

2. Vakuumpumpe nach Anspruch 1, wobei
   das Kontrollsignal mindestens einen Istwert für einen in dem Magnetlager (300) fließenden Strom umfasst.

3. Vakuumpumpe nach Anspruch 1, wobei
   das Kontrollsignal mindestens einen Sollwert für einen in dem Magnetlager (300) fließenden Strom umfasst.

4. Vakuumpumpe nach einem der Ansprüche 1 bis 3, wobei

   die Positionsregelung (400) des Rotors (600) mittels des aktiven Magnetlagers (300) fünf Koordinaten der räumlichen Lage des Rotors (600) regelt und
   ein jeweiliger Istwert für die fünf Koordinaten einen gemessenen Wert der Koordinate und eine berechnete Koordinatenabweichung umfasst, die von einem jeweiligen Istwert oder Sollwert eines jeweiligen Stroms abhängt, der durch eine jeweilige Spule (332, 342) des Magnetlagers (300) fließt, die einer jeweiligen der fünf Koordinaten zugeordnet ist.

5. Vakuumpumpe nach Anspruch 1, wobei
das jeweilige Kontrollsignal einen Sollwert für eine Kraft und/oder ein Drehmoment, die auf einen Schwerpunkt des Rotors (600) wirken, in Richtung der mindestens einen Koordinate umfasst.

6. Vakuumpumpe nach Anspruch 5, wobei

die Positionsregelung vier Koordinaten, die zwei Koordinaten der Translation und zwei Koordinaten der Rotation für den Schwerpunkt des Rotors (600) umfassen, und eine weitere Koordinate regelt, welche eine Verschiebung des Rotors (600) entlang einer Drehachse (610) des Rotors (600) repräsentiert, und
das Kontrollsignal zwei Sollwerte für eine jeweilige Kraft, die in Richtung jeweils einer der zwei Koordinaten der Translation auf den Schwerpunkt des Rotors (600) wirkt, zwei Sollwerte für ein jeweiliges Drehmoment, das in Richtung jeweils einer der zwei Koordinaten der Rotation auf den Schwerpunkt des Rotors (600) wirkt, und einen Sollwert für einen Strom umfasst, welcher der Verschiebung des Rotors (600) entlang dessen Drehachse zugeordnet ist.

7. Vakuumpumpe nach einem der Ansprüche 1 bis 6, wobei

die Positionsregelung (400) ein Tiefpassfilter (510) für das Kontrollsignal umfasst und
das Tiefpassfilter (510) vorzugsweise eine Cutoff-Frequenz aufweist, die kleiner als 1 Hz ist.

8. Vakuumpumpe nach einem der Ansprüche 1 bis 7, wobei die berechnete Koordinatenabweichung durch eine Differenz zwischen einem momentan gemessenen Wert des Kontrollsignals und einem unmittelbar nach einer Kalibrierung der Positionsregelung (400) ermittelten Referenzwert des Kontrollsignals gegeben ist.

9. Verfahren zum Regeln einer Position eines Rotors (600) einer Vakuumpumpe, insbesondere einer Turbomolekularpumpe, wobei die Vakuumpumpe den Rotor (600), ein aktives Magnetlager (300) und eine Positionsregelung (400) für den Rotor (600) umfasst, die mit dem Magnetlager (300) in einer funktionalen Verbindung steht,
wobei das Verfahren umfasst, dass:

der Rotor (600) während des Betriebs der Vakuumpumpe mittels des Magnetlagers (300) und der Positionsregelung (400) in einer vorbestimmten räumlichen Lage gehalten wird, und
ein jeweiliger Istwert für mindestens eine Koordinate der räumlichen Lage des Rotors (600) anhand eines gemessenen Werts der Koordinate und anhand einer berechneten Koordinatenabweichung festgelegt wird, wobei die Koordinatenabweichung anhand eines Kontrollsignals ermittelt wird, das mit Kräften in Beziehung steht, die durch das Magnetlager (300) ausgeübt werden.

10. Verfahren nach Anspruch 9, wobei

fünf Koordinaten der räumlichen Lage des Rotors (600) mittels des aktiven Magnetlagers (300) durch die Positionsregelung des Rotors (600) geregelt werden und
ein jeweiliger Istwert für die fünf Koordinaten einen gemessenen Wert der Koordinate und eine berechnete Koordinatenabweichung umfasst, die von einem jeweiligen Istwert oder Sollwert eines jeweiligen Stroms abhängt, der durch eine jeweilige Spule (332, 342) des Magnetlagers (300) fließt, die einer jeweiligen der fünf Koordinaten zugeordnet ist.

11. Verfahren nach einem der Ansprüche 9 oder 10, wobei sich der jeweilige gemessene Wert der Koordinate auf einen jeweiligen Referenzwert bezieht, der unmittelbar nach einer Kalibrierung der Positionsregelung (400) ermittelt wird.

12. Verfahren zum Kalibrieren einer Positionsregelung (400) einer Vakuumpumpe, insbesondere Turbomolekularpumpe,

wobei die Vakuumpumpe einen Rotor (600) und ein aktives Magnetlager (300) mit mehreren Lagerelementen (640) aufweist, die jeweils einer von mehreren Achsen zugeordnet sind,
wobei die Positionsregelung (400) mit den Lagerelementen (640) in einer funktionalen Verbindung steht, um den Rotor (600) mittels der Lagerelemente (640) jeweils entlang der zugeordneten Achse zu positionieren, und wobei das Verfahren umfasst, dass:

die Lagerelemente (640) jeweils mittels der Positionsregelung (400) derart gesteuert werden, dass der Rotor (600) entlang der jeweiligen Achse verschoben wird, bis ein mechanischer Kontakt zwischen dem Rotor (600) und einem jeweiligen Fanglager der Vakuumpumpe auftritt,

Ausgangssignale der Positionsregelung (400) während der Steuerung der jeweiligen Lagerelemente (640) erfasst werden,

die Ausgangssignale der Positionsregelung (400) einer Extremwert-Ermittlungseinheit zugeführt werden, die ausgebildet ist, Extremwerte des jeweiligen Ausgangssignals Endpositionen des Rotors (600) zuzuordnen, bei denen der mechanische Kontakt zwischen dem Rotor (600) und einem der Fanglager entlang der jeweiligen Achse auftritt, und

anhand der Endpositionen und der Extremwerte Kalibrierungswerte für die Positionsregelung (400) berechnet werden, welche die Positionsregelung (400) während des Betriebs der Vakuumpumpe verwendet, um den Rotor (600) in einer vorbestimmten räumlichen Lage zu halten.

13. Verfahren nach Anspruch 12, wobei

die Lagerelemente (640) des aktiven Magnetlagers (300) axiale Lagerelemente und radiale Lagerelemente (640) umfassen, und

die jeweiligen Extremwerte für die radialen Lagerelemente (640) ermittelt werden, während die axialen Lagerelemente aktiviert sind.

14. Verfahren nach Anspruch 13, wobei

die jeweiligen Extremwerte für die radialen Lagerelemente (640) anhand einer vorbestimmten Sequenz ermittelt werden, bis allen Lagerelementen (640) ein jeweiliger Extremwert zu geordnet ist, und

die vorbestimmte Sequenz umfasst, dass:

stets nur radiale Lagerelemente (640) aktiviert sind, die der gleichen radialen Richtung oder zwei benachbarten radialen Richtungen zugeordnet sind, und

nur solche radiale Lagerelemente (640) neu aktiviert werden, die den bisher aktivierten Lagerelementen (640) unmittelbar benachbart sind.

15. Verfahren nach einem der Ansprüche 12 bis 14, wobei

alle Lagerelemente (640) unmittelbar nach der Berechnung der jeweiligen Kalibrierungswerte für die jeweiligen Lagerelemente (640) aktiviert werden und

während der Aktivierung der Lagerelemente (640) momentane Kontrollsignale der Positionsregelung (400), die mit Kräften in Beziehung stehen, die durch das Magnetlager (300) ausgeübt werden, als Referenzwerte erfasst und in einem nicht-flüchtigen Medium gespeichert werden, um die Referenzwerte während des Betriebs der Vakuumpumpe bei einer Korrektur jeweiliger gemessener Werte einer jeweiligen Koordinate des Rotors (600) entlang der jeweiligen Achse zu verwenden.

Fig. 1

Fig. 2

Fig. 3

Fig. 4

Fig. 5

Fig. 5A

Fig. 5B

Fig. 6

Fig. 6A

Fig. 6B

Fig. 7

Fig. 8